# EUROPEAN PATENT APPLICATION

(11) **EP 4 847 182 A1**
(43) Date of publication of application: **02.12.2026**
(21) Application number: 25901355.5
(22) Date of filing: 23.01.2025
(51) Int. Cl.: B23K 20/12, B23Q 11/10

(54) **FRICTION STIR WELDING JIG, MACHINE TOOL, AND METHOD FOR PROCESSING WORKPIECE**

(30) Priority: 06.12.2024 JP 2024212971
(71) Applicant: Yamazaki Mazak Corporation, Niwa-gun, Aichi 480-0197 (JP)
(72) Inventor: MINATANI, Masayasu, Niwa-gun, Aichi 480-0197 (JP); MATSUBARA, Eiji, Niwa-gun, Aichi 480-0197 (JP); OGAWA, Seita, Niwa-gun, Aichi 480-0197 (JP)
(74) Representative: TBK
(86) International application number: PCT/JP2025/002070
(87) International publication number: WO 2026/120826

(57) **Abstract**

A friction stir welding jig includes a backing component configured to receive pressing force from a friction stir welding tool via a first workpiece serving as a joining target object and support the first workpiece, a holding component configured to hold the first workpiece, and at least one nozzle disposed on the backing component and configured to spray a coolant toward the first workpiece.

## Description

### Technical Field

The present invention relates to a friction stir welding jig, a machine tool, and a workpiece machining method.

### Background Art

A friction stirr welder including cooling means has been known.

Example related techniques include a frictional welding method disclosed in Patent Literature 1. The frictional welding method described in Patent Literature 1 includes inserting a metal bar of a material harder than the material of a machined object into a welding portion of the machined object. The weight of the metal bar is supported by supporting means detachably provided to a back surface of the welding portion of the machined object. FIG. 6 in Patent Literature 1 illustrates how the frictional welding is performed inside a tank.

### Citation List

### Patent Literature

PTL1: JP 2000-153377 A.

### Summary of Invention

### Technical Problem

An object of the present invention is to provide a friction stir welding jig, a machine tool, and a workpiece machining method enabling execution of friction stir welding while efficiently cooling a workpiece serving as a joining target object.

### Solution to Problem

Embodiments of the present invention relate to a friction stir welding jig, a machine tool, and a workpiece machining method described below.

(1) A friction stir welding jig includes a backing component, a holding component, and at least one nozzle. The backing component is configured to receive pressing force from a friction stir welding tool via a first workpiece serving as a joining target object and support the first workpiece. The holding component is configured to hold the first workpiece. The at least one nozzle is disposed on the backing component and configured to spray a coolant toward the first workpiece.
(2) A machine tool includes a friction stir welding jig, a supporter, a machining head, a rotational driver, a mover, and a supplier. On the friction stir welding jig, a first workpiece serving as a joining target object is fixed, the friction stir welding jig including at least one nozzle configured to spray a coolant toward the first workpiece. The supporter is configured to support the friction stir welding jig. The machining head includes a spindle and a support configured to support the spindle to be rotatable about a first axis. The rotational driver is configured to rotate the spindle about the first axis. The mover is configured to move the machining head relative to the supporter. The supplier is configured to supply the coolant to the at least one nozzle. The friction stir welding jig includes a backing component, a holding component, and the at least one nozzle. The backing component is configured to receive pressing force from a friction stir welding tool via the first workpiece and support the first workpiece. The holding component is configured to hold the first workpiece. The at least one nozzle is disposed on the backing component.
(3) A workpiece machining method includes attaching a first workpiece serving as a joining target object to a friction stir welding jig, with a holding component of the friction stir welding jig holding the first workpiece. By friction stirring, the first workpiece and a second workpiece are joined with a backing component of the friction stir welding jig receiving pressing force from a friction stir welding tool via the first workpiece. A coolant is sprayed from at least one nozzle disposed on the backing component to the first workpiece while the friction stirring is being performed.

### Effects of Invention

The present invention can provide a friction stir welding jig, a machine tool, and a workpiece machining method enabling execution of friction stir welding while efficiently cooling a workpiece serving as a joining target object.

### Brief Description of Drawings

[FIG. 1] FIG. 1 is a schematic perspective view schematically illustrating a friction stir welding jig according to embodiment 1.
[FIG. 2] FIG. 2 is a schematic perspective view schematically illustrating a state where a first workpiece is attached to the friction stir welding jig.
[FIG. 3] FIG. 3 is a schematic perspective view schematically illustrating a state where the first workpiece and a second workpiece are supported by the friction stir welding jig.
[FIG. 4] FIG. 4 is a schematic cross-sectional view schematically illustrating how a welding mode is executed.
[FIG. 5] FIG. 5 is a diagram schematically illustrating a machine tool according to embodiment 1.
[FIG. 6] FIG. 6 is a schematic perspective view schematically illustrating the friction stir welding jig according to embodiment 1.
[FIG. 7] FIG. 7 is a schematic cross-sectional view schematically illustrating a state where the first workpiece and the second workpiece are supported by a friction stir welding jig according to modification 1 of embodiment 1.
[FIG. 8] FIG. 8 is a schematic perspective view schematically illustrating the friction stir welding jig according to embodiment 1.
[FIG. 9] FIG. 9 is a schematic cross-sectional view schematically illustrating how the welding mode is executed.
[FIG. 10] FIG. 10 is a schematic cross-sectional view schematically illustrating how the welding mode is executed.
[FIG. 11] FIG. 11 is a schematic perspective view schematically illustrating a friction stir welding jig according to modification 2 of embodiment 1.
[FIG. 12] FIG. 12 is a schematic perspective view schematically illustrating a state where the first workpiece and the second workpiece are supported by the friction stir welding jig according to modification 2 of embodiment 1.
[FIG. 13] FIG. 13 is a schematic perspective view schematically illustrating how the welding mode is executed.
[FIG. 14] FIG. 14 is a schematic perspective view schematically illustrating how the welding mode is executed.
[FIG. 15] FIG. 15 is a schematic perspective view schematically illustrating how the welding mode is executed.
[FIG. 16] FIG. 16 is a schematic perspective view schematically illustrating how the welding mode is executed.
[FIG. 17] FIG. 17 is a schematic perspective view schematically illustrating an example of the first workpiece.
[FIG. 18] FIG. 18 is a schematic perspective view schematically illustrating how a lid is attached to a case.
[FIG. 19] FIG. 19 is a schematic perspective view schematically illustrating how a cover is disposed to the case.
[FIG. 20] FIG. 20 is a schematic cross-sectional view schematically illustrating a state where the cover is disposed to the case.
[FIG. 21] FIG. 21 is a schematic cross-sectional view schematically illustrating a state where the first workpiece is supported by backing components.
[FIG. 22] FIG. 22 is a schematic cross-sectional view schematically illustrating a modification of a supply flow channel formed inside a backing component.
[FIG. 23] FIG. 23 is a schematic cross-sectional view schematically illustrating how the height of a first end of a first post can be adjusted.
[FIG. 24] FIG. 24 is a schematic cross-sectional view schematically illustrating how the height of a second end of a second post can be adjusted.
[FIG. 25] FIG. 25 is a schematic perspective view schematically illustrating a friction stir welding jig according to modification 2 of embodiment 1.
[FIG. 26] FIG. 26 is a schematic front view schematically illustrating a part of the machine tool according to embodiment 1.
[FIG. 27] FIG. 27 is a schematic front view schematically illustrating a part of the machine tool according to embodiment 1.
[FIG. 28] FIG. 28 is a schematic perspective view schematically illustrating the machine tool according to embodiment 1.
[FIG. 29] FIG. 29 is a schematic perspective view schematically illustrating the machine tool according to embodiment 1.
[FIG. 30] FIG. 30 is a schematic perspective view schematically illustrating how a cutting mode is executed.
[FIG. 31] FIG. 31 is a diagram schematically illustrating how a controller can control a plurality of control target devices.
[FIG. 32] FIG. 32 is a schematic front view schematically illustrating a part of the machine tool according to embodiment 1.
[FIG. 33] FIG. 33 is a schematic front view schematically illustrating a part of the machine tool according to embodiment 1.
[FIG. 34] FIG. 34 is a diagram illustrating a first path.
[FIG. 35] FIG. 35 is a schematic perspective view schematically illustrating a friction stir welding jig according to embodiment 2.
[FIG. 36] FIG. 36 is a schematic perspective view schematically illustrating a state where the first workpiece and the second workpiece are supported by the friction stir welding jig.
[FIG. 37] FIG. 37 is a schematic front view schematically illustrating a part of a machine tool according to embodiment 2.
[FIG. 38] FIG. 38 is a schematic cross-sectional view schematically illustrating how the welding mode is executed.
[FIG. 39] FIG. 39 is a schematic perspective view schematically illustrating an example of the first workpiece.
[FIG. 40] FIG. 40 is a schematic perspective view schematically illustrating how the second workpiece and a third workpiece are disposed to the first workpiece.
[FIG. 41] FIG. 41 is a flowchart illustrating an example of a workpiece machining method according to an embodiment.
[FIG. 42] FIG. 42 is a schematic cross-sectional view illustrating an example where the backing components are in contact with both the first workpiece and the second workpiece. Description of Embodiments

A friction stir welding jig 4, a machine tool 1, and a workpiece machining method according to embodiments will now be described with reference to the accompanying drawings. In the description of the embodiments, portions and components having the same functions are denoted by the same reference numerals, and the redundant description on the portions and the components denoted by the same reference numerals will be omitted.

### (Definition of Terms)

In this specification, a direction of pressing a joining target object W (more specifically, a first workpiece W1 serving as the joining target object) by a friction stir welding tool T1 is defined as a first direction DR1. A direction opposite to the first direction DR1 is defined as a second direction DR2.

The first direction DR1 may be a downward direction (more specifically, a vertically downward direction), or may be a lateral direction (more specifically, a horizontal direction). For example, if the machine tool 1 is a vertical machining center, the first direction DR1 is a downward direction (more specifically, a vertically downward direction). For example, if the machine tool 1 is a lateral machining center, the first direction DR1 is a lateral direction (more specifically, a horizontal direction).

### (Embodiment 1)

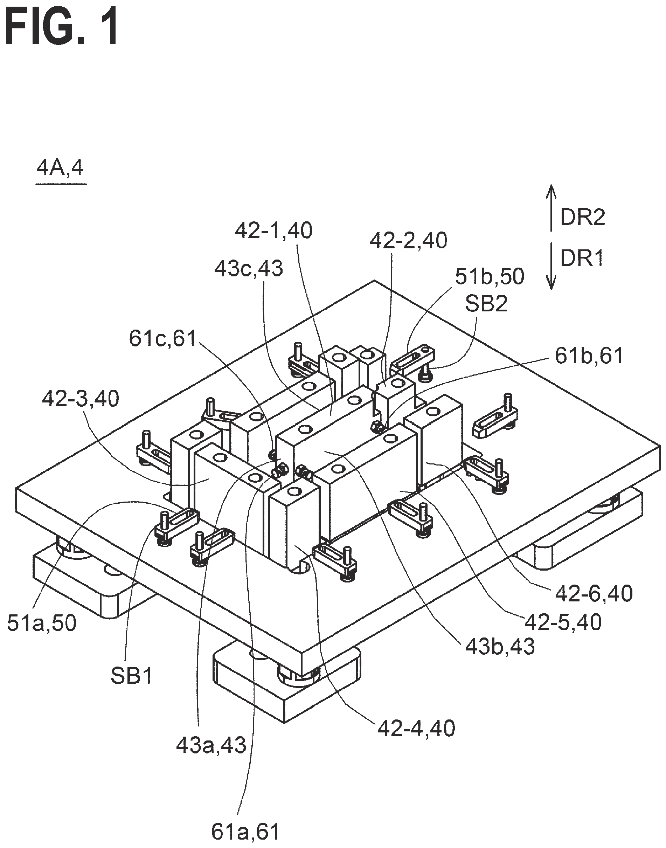

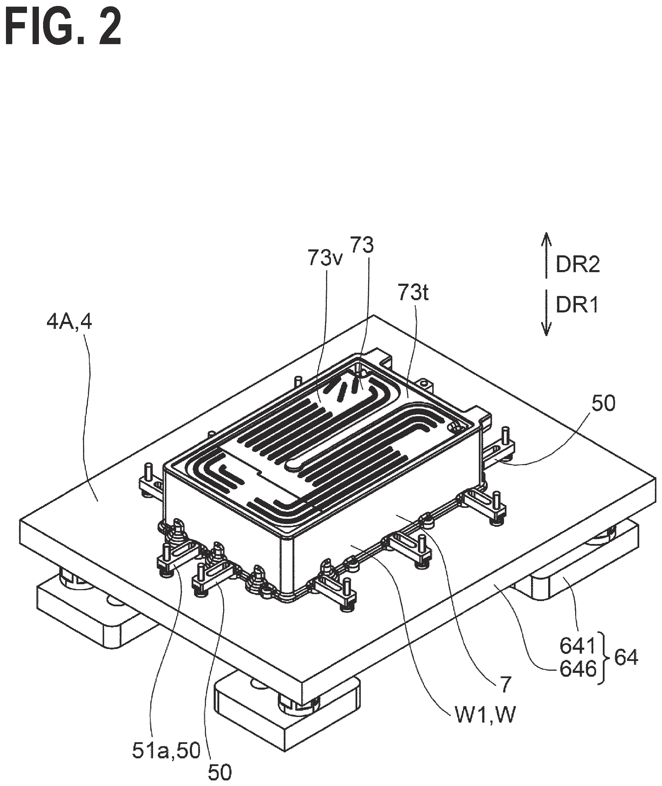

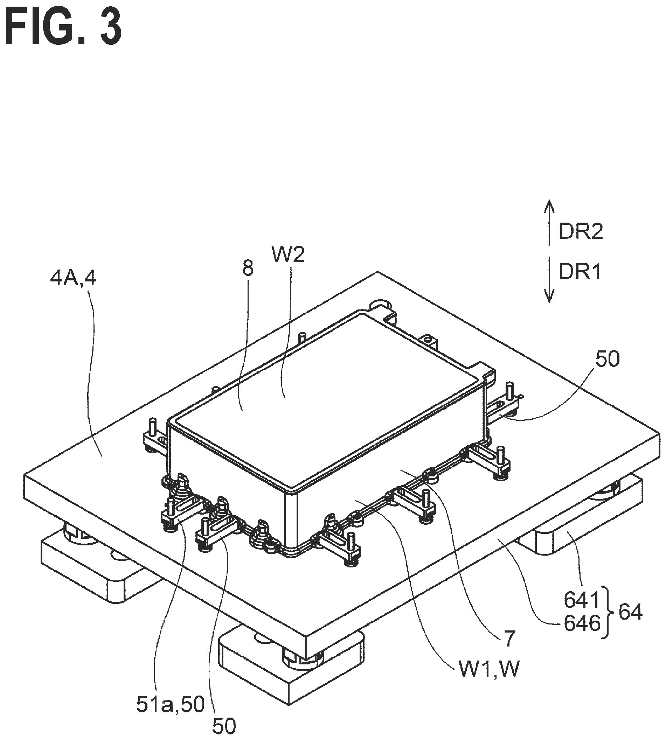

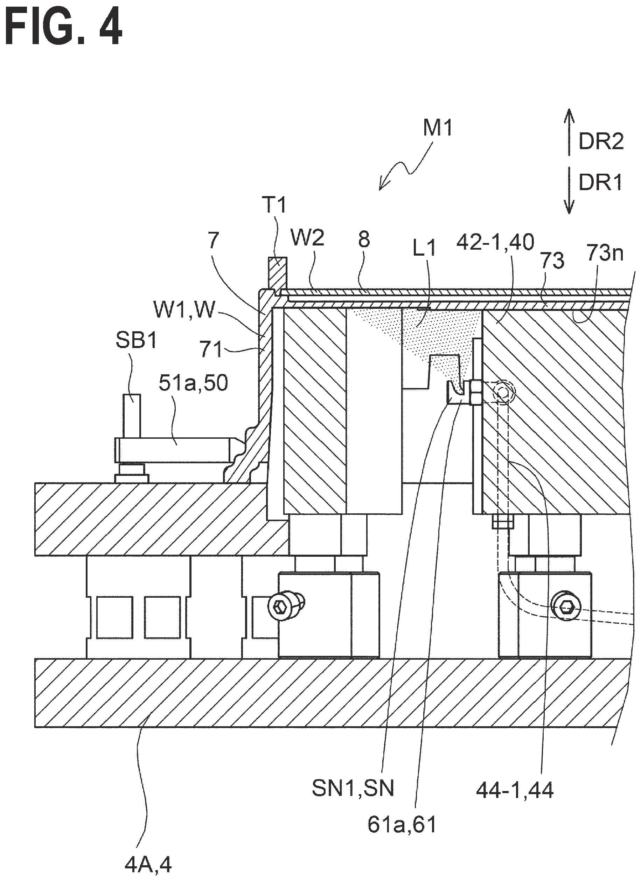

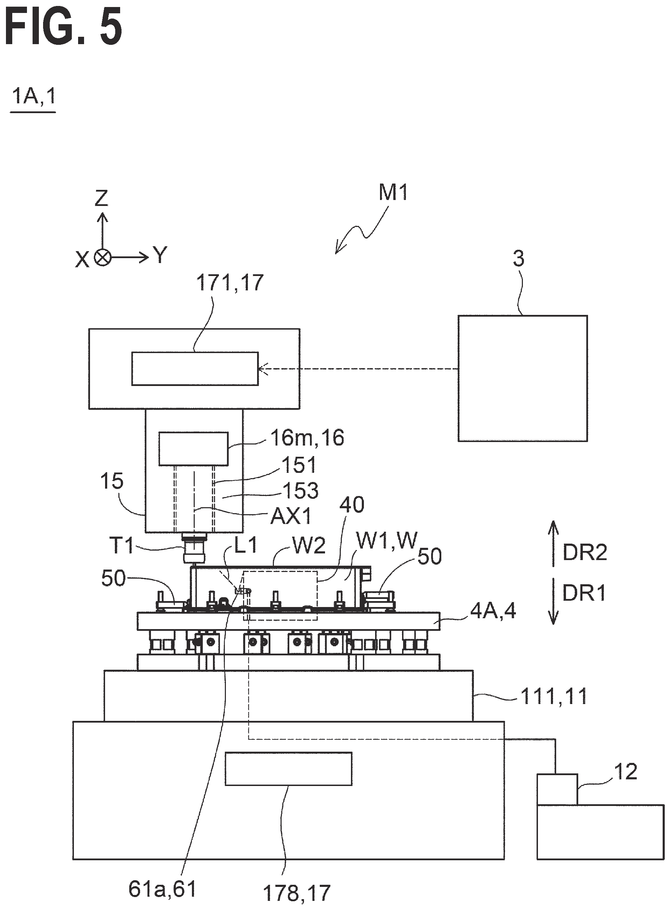

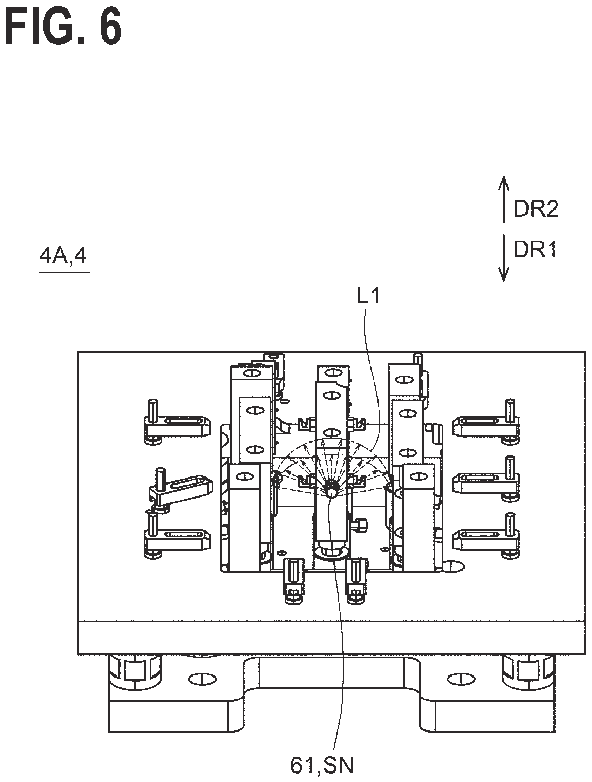

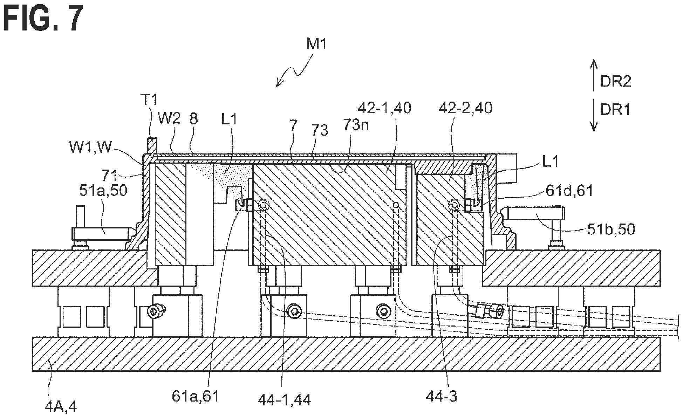

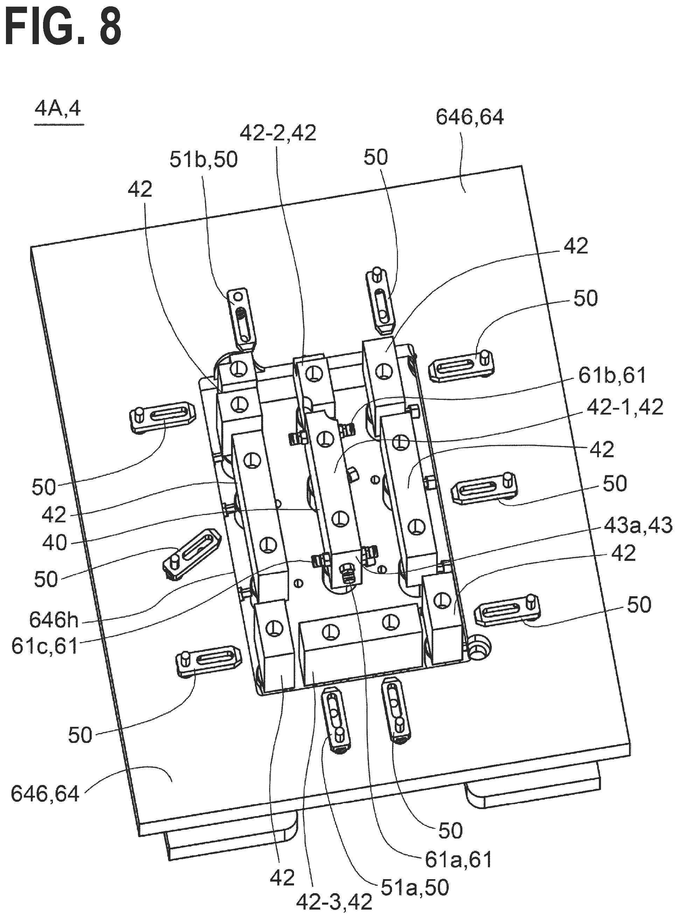

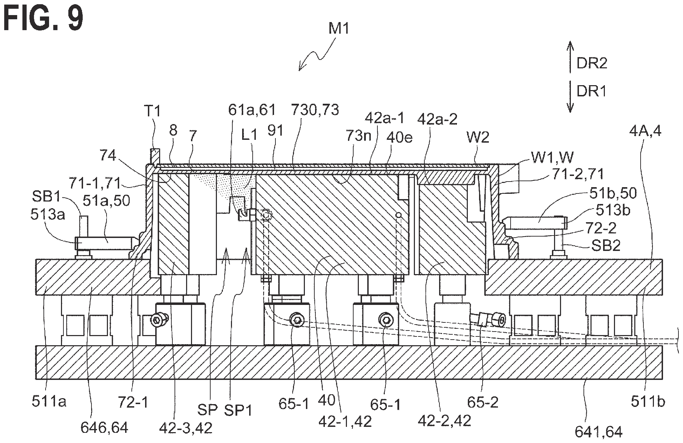

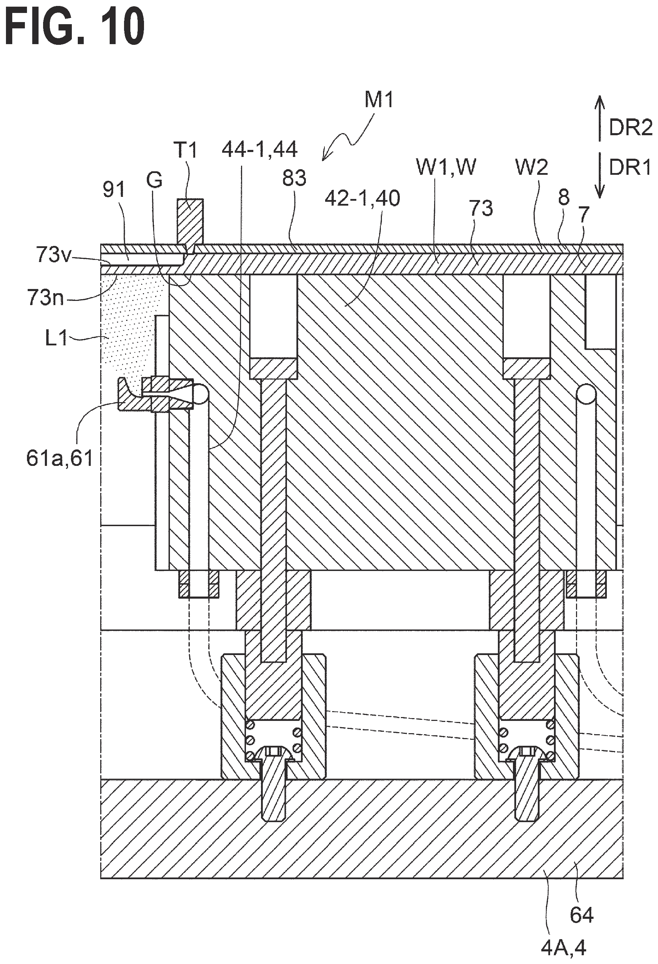

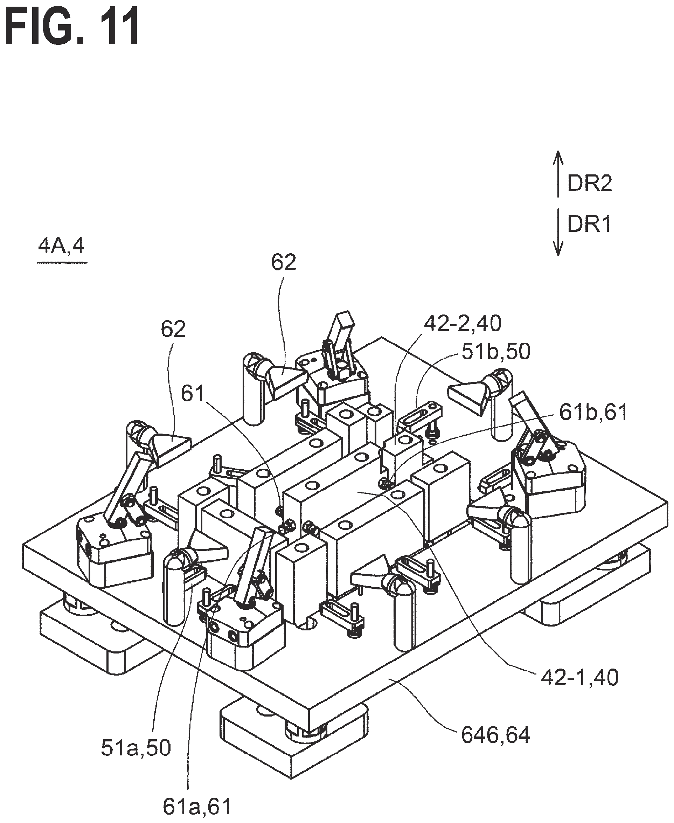

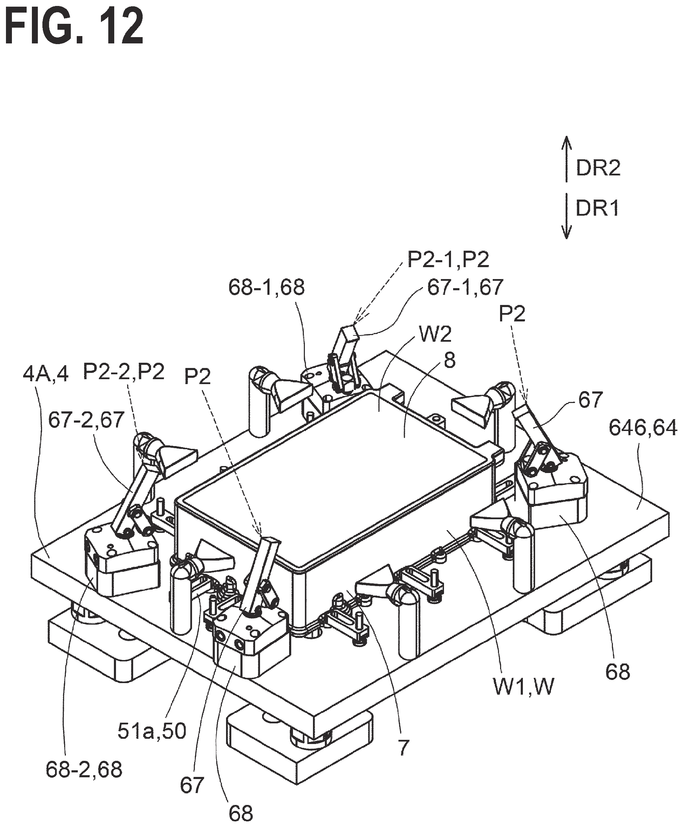

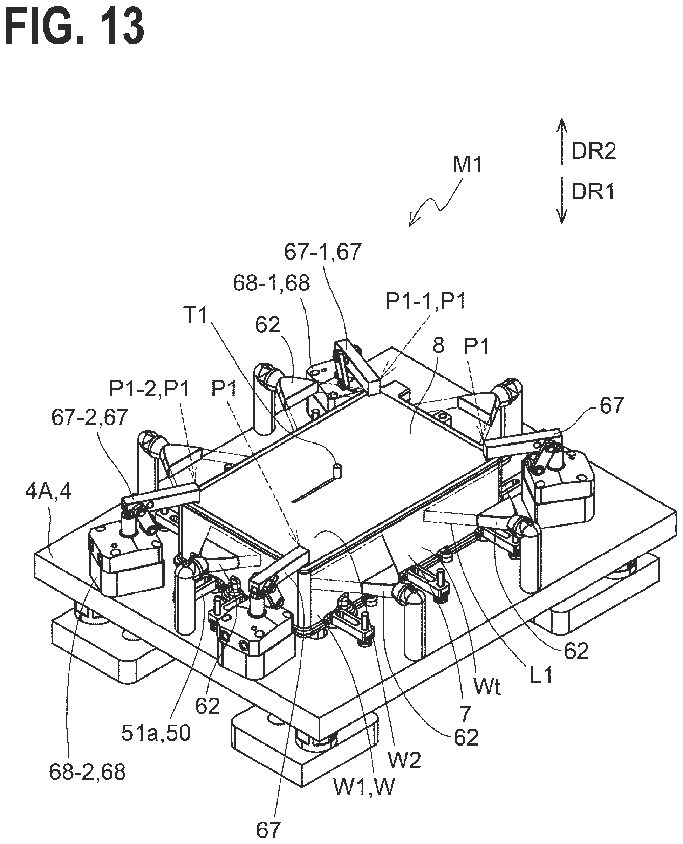

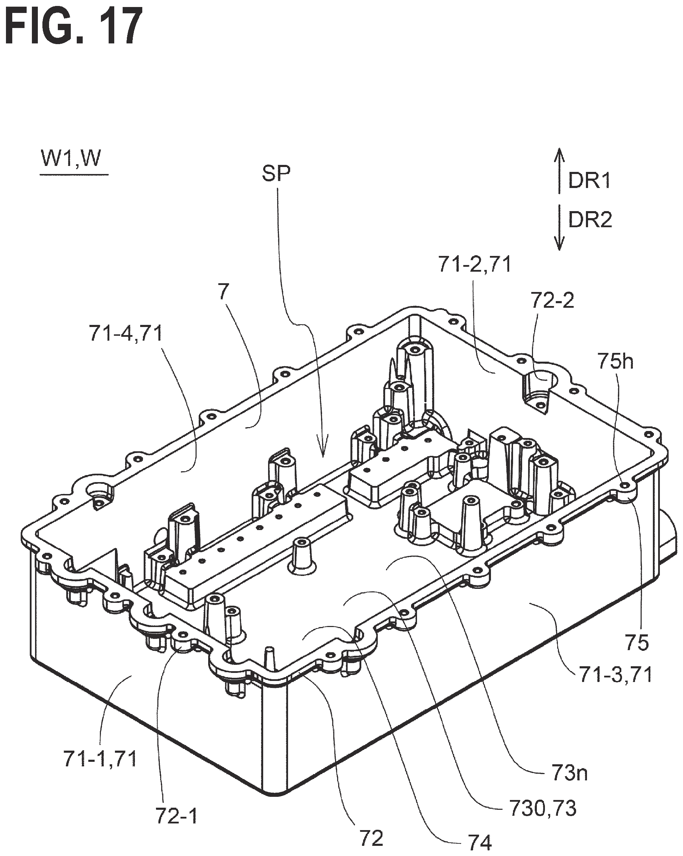

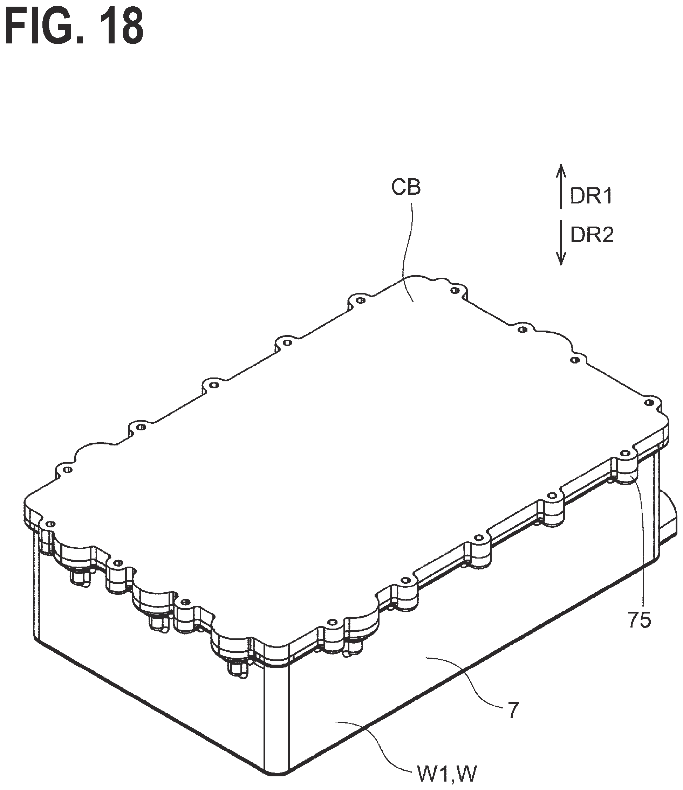

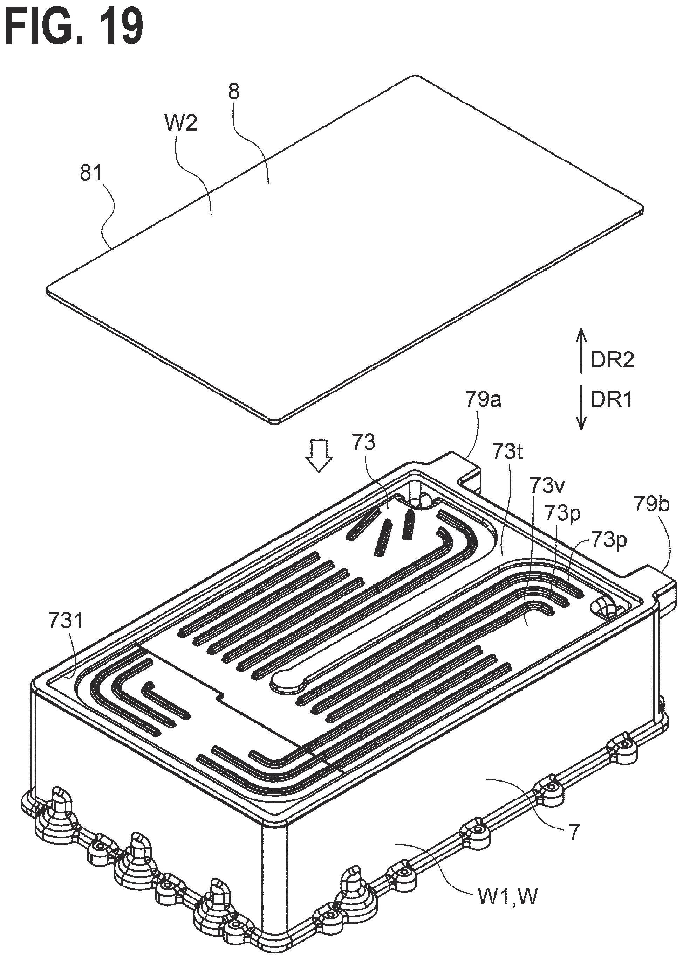

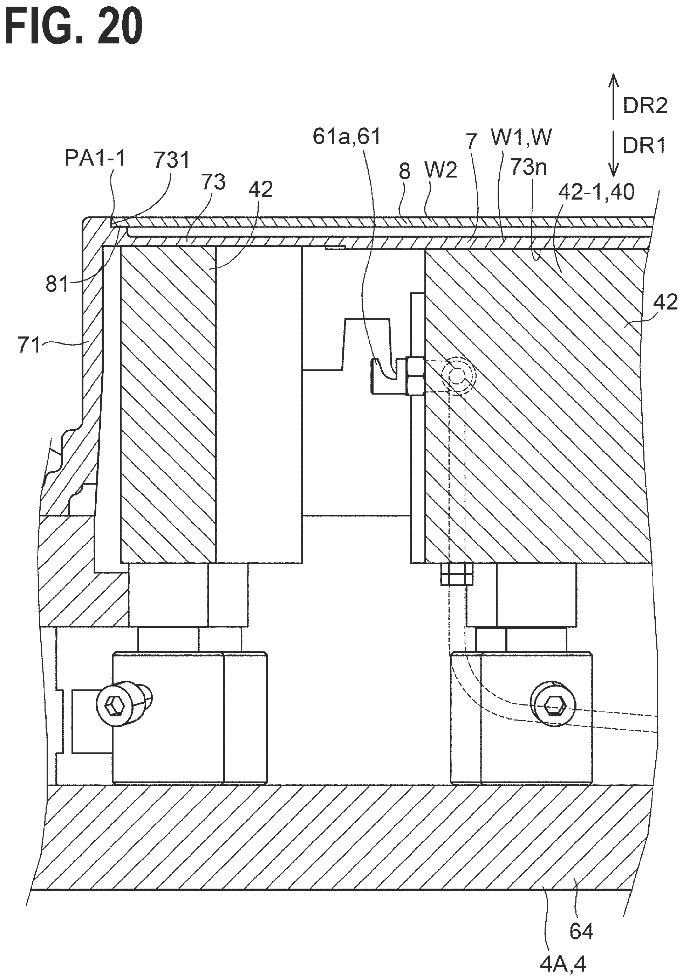

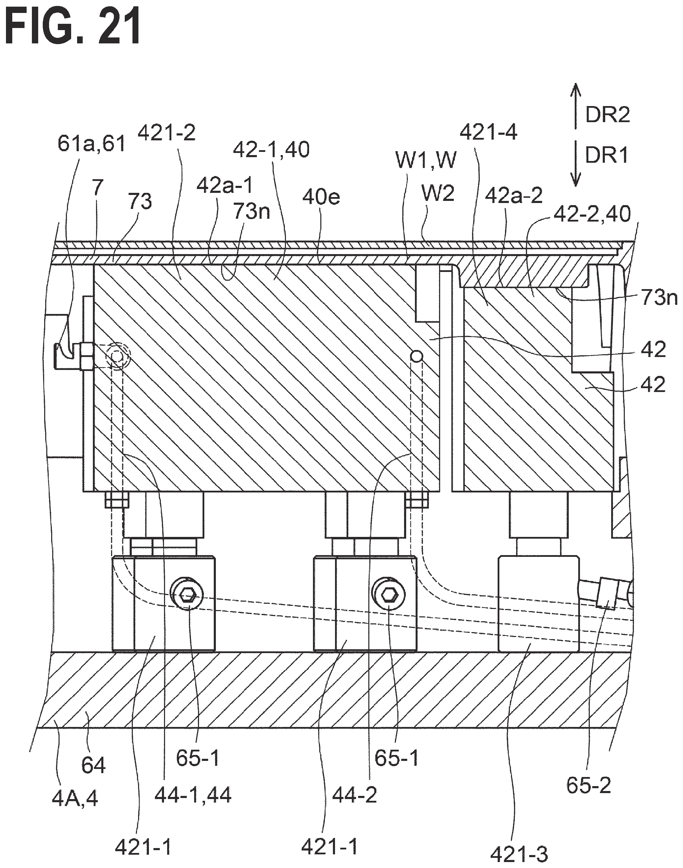

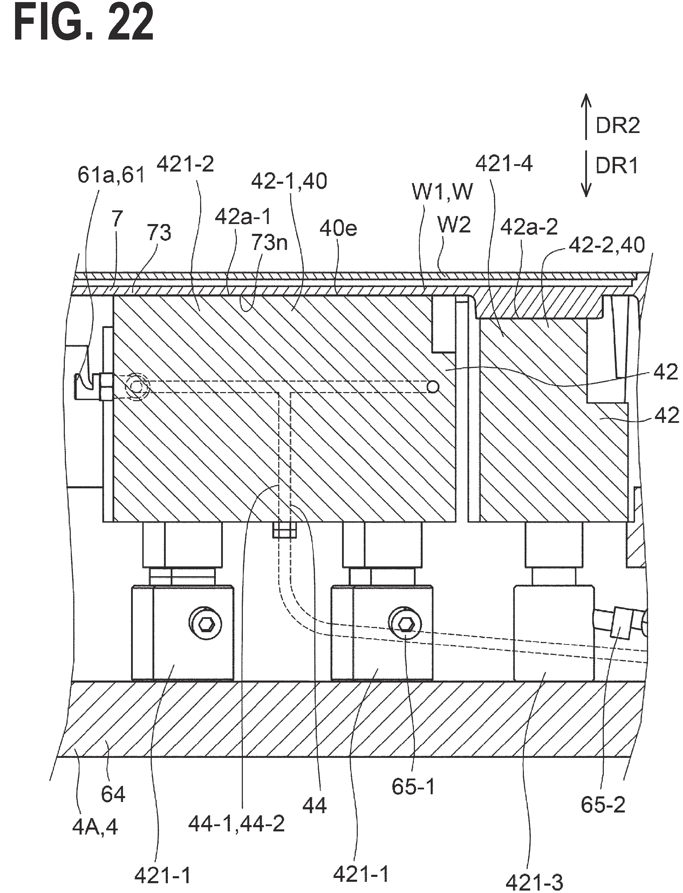

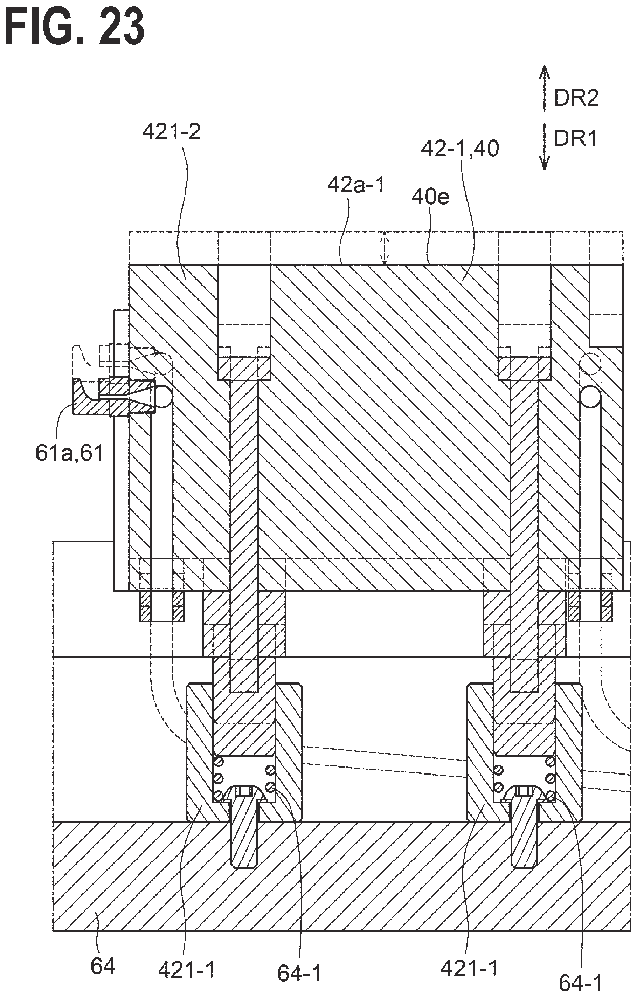

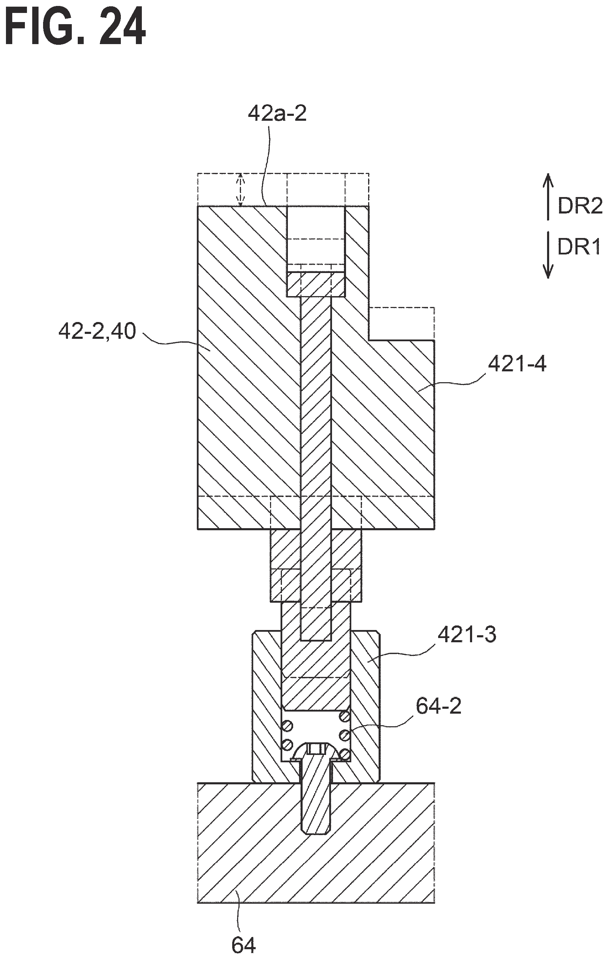

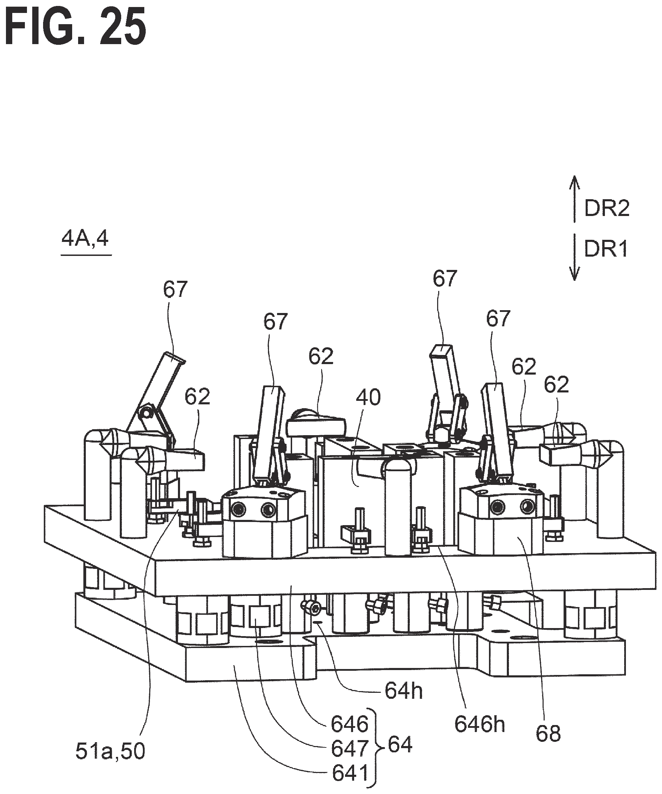

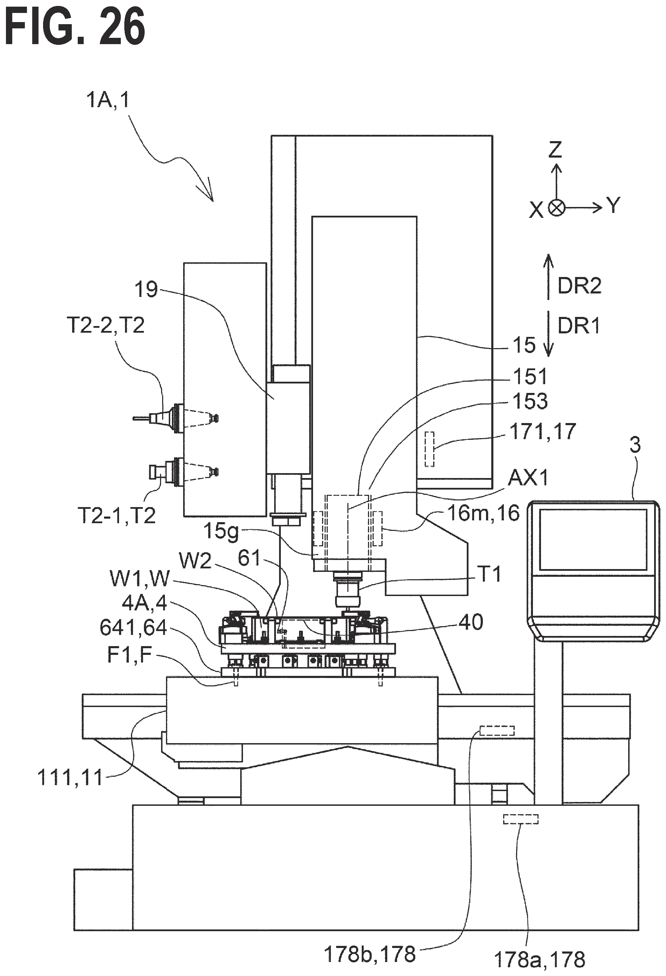

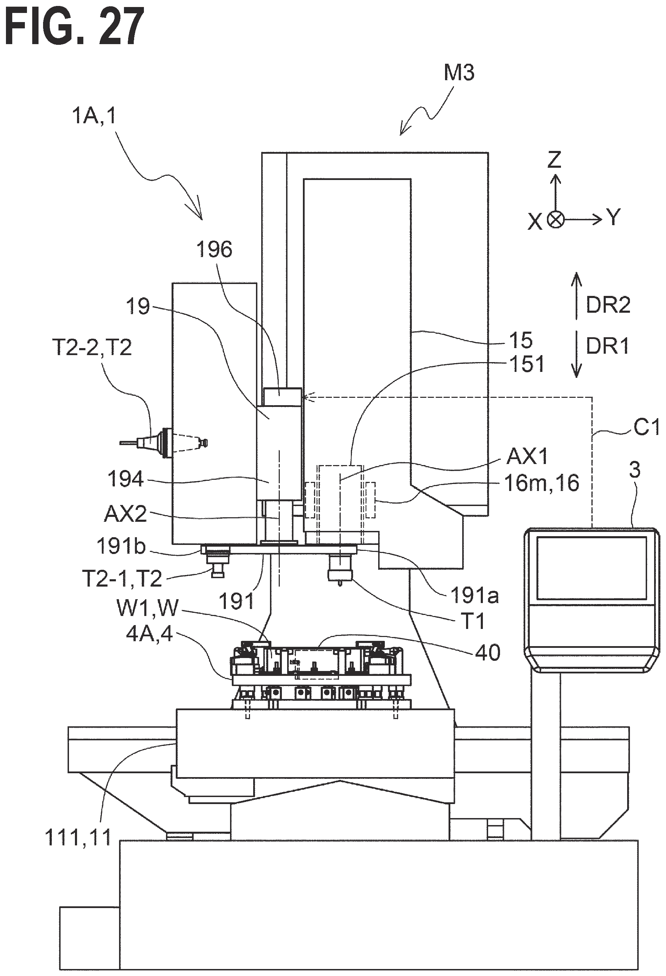

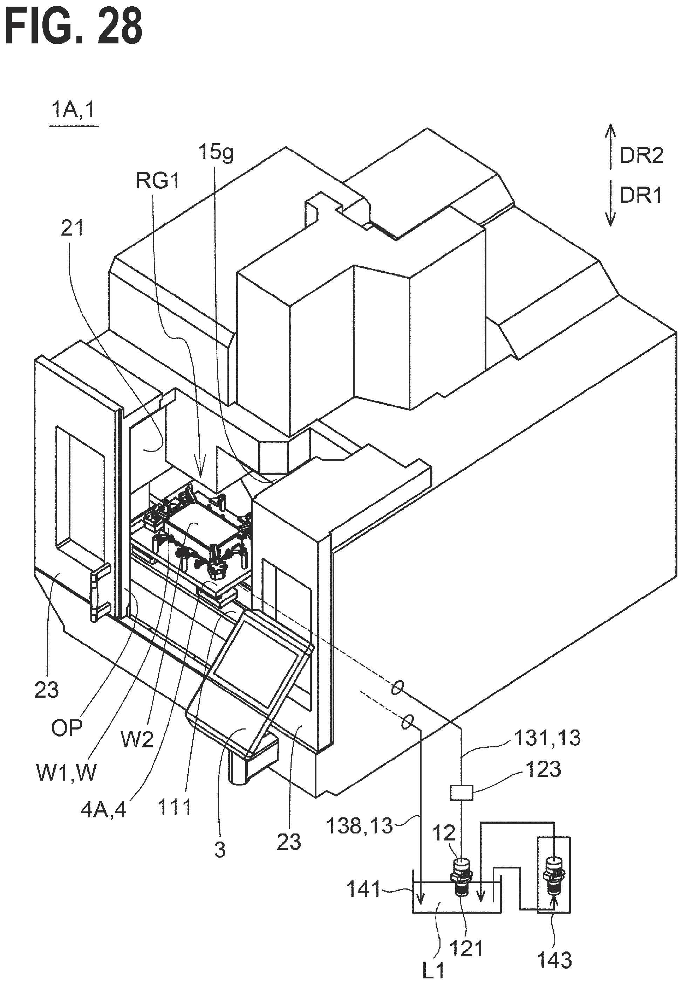

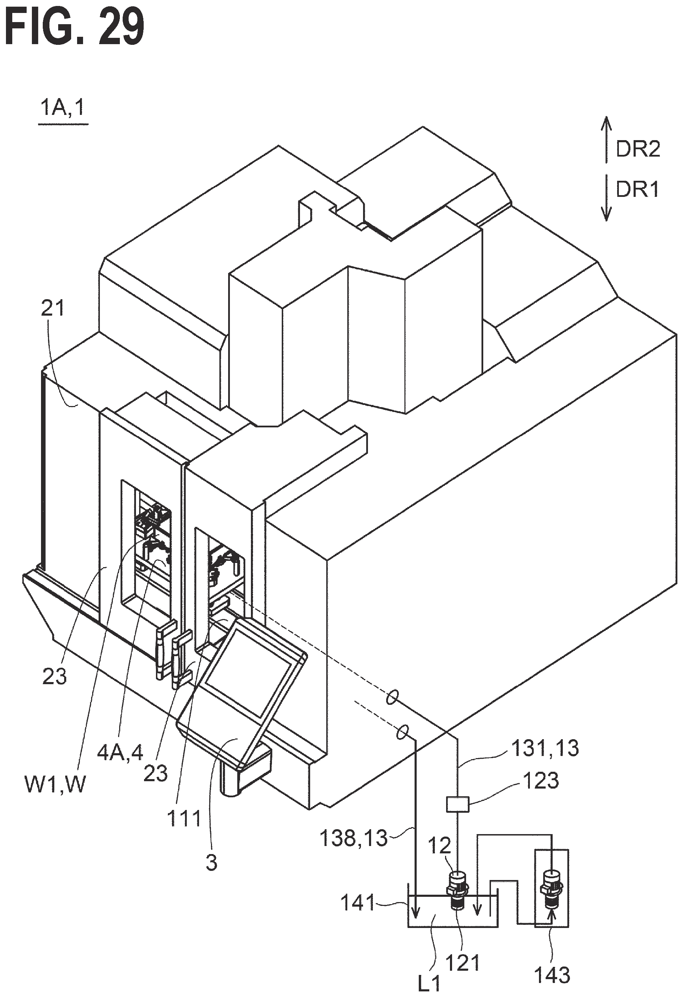

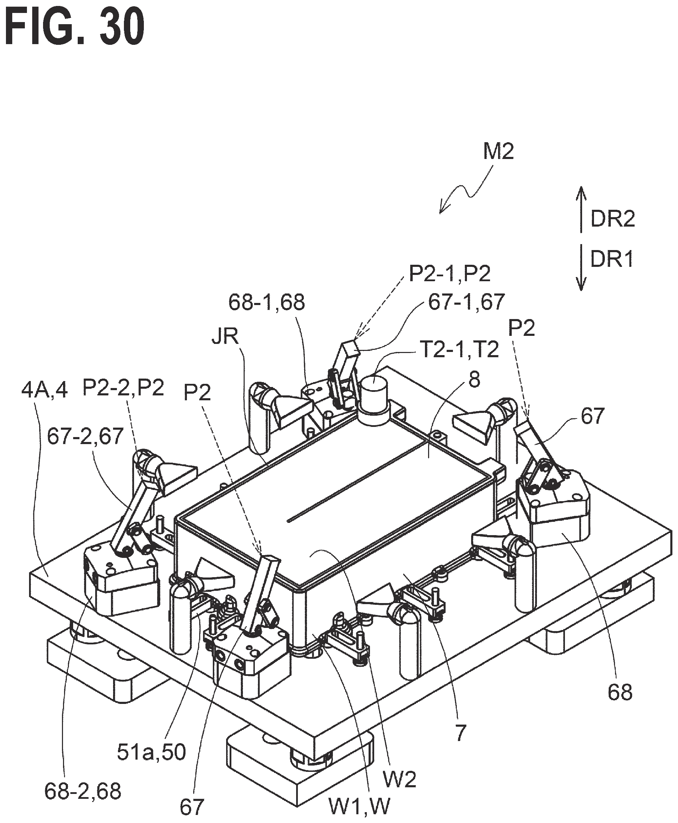

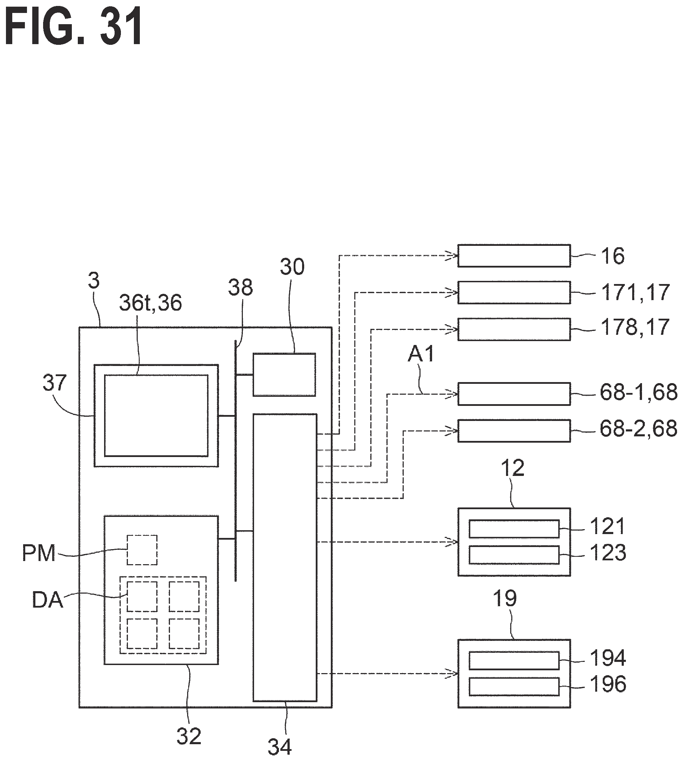

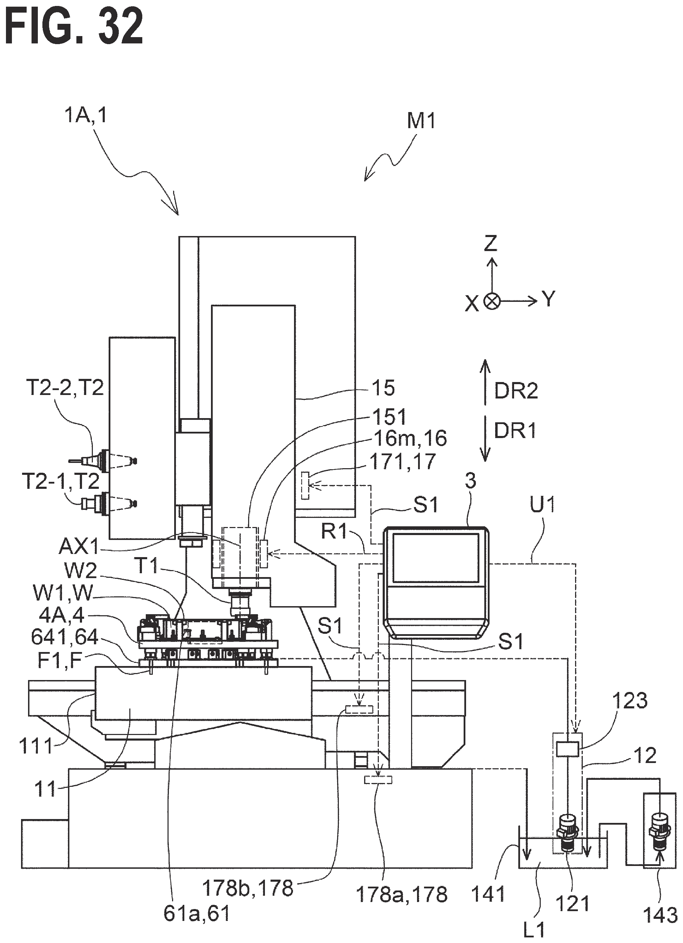

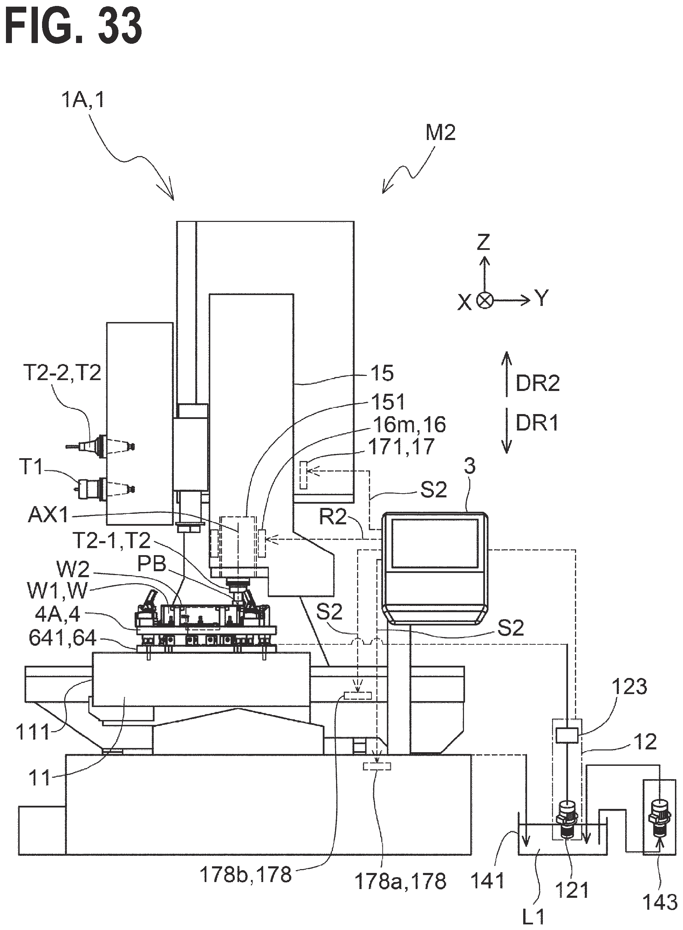

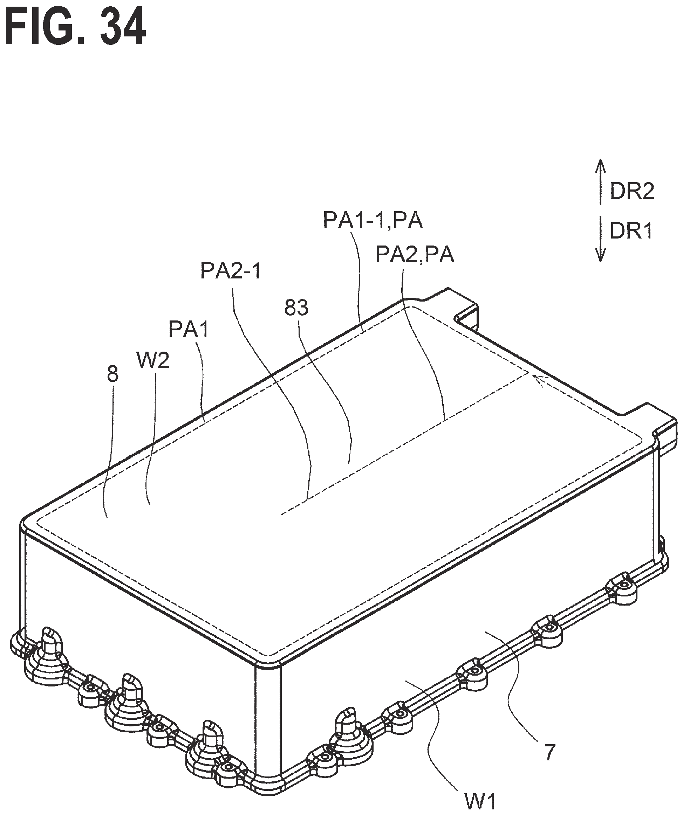

Referring to FIG. 1 to FIG. 34, a friction stir welding jig 4A and a machine tool 1A according to embodiment 1 will be described. FIG. 1 is a schematic perspective view schematically illustrating the friction stir welding jig 4A according to embodiment 1. FIG. 2 is a schematic perspective view schematically illustrating a state where a first workpiece W1 is attached to the friction stir welding jig 4A. FIG. 3 is a schematic perspective view schematically illustrating a state where the first workpiece W1 and a second workpiece W2 are supported by the friction stir welding jig 4A. FIG. 4 is a schematic cross-sectional view schematically illustrating how a welding mode M1 is executed. FIG. 5 is a diagram schematically illustrating the machine tool 1A according to embodiment 1. FIG. 6 is a schematic perspective view schematically illustrating the friction stir welding jig 4A according to embodiment 1. FIG. 7 is a schematic cross-sectional view schematically illustrating a state where the first workpiece W1 and the second workpiece W2 are supported by a friction stir welding jig 4A according to modification 1 of embodiment 1. FIG. 8 is a schematic perspective view schematically illustrating the friction stir welding jig 4A according to embodiment 1. FIG. 9 and FIG. 10 are schematic cross-sectional views schematically illustrating how the welding mode M1 is executed. FIG. 11 is a schematic perspective view schematically illustrating a friction stir welding jig 4A according to modification 2 of embodiment 1. FIG. 12 is a schematic perspective view schematically illustrating a state where the first workpiece W1 and the second workpiece W2 are supported by the friction stir welding jig 4A according to modification 2 of embodiment 1. FIG. 13 to FIG. 16 are schematic perspective views schematically illustrating how the welding mode M1 is executed. FIG. 17 is a schematic perspective view schematically illustrating an example of the first workpiece W1. FIG. 18 is a schematic perspective view schematically illustrating how a lid CB is attached to a case 7. FIG. 19 is a schematic perspective view schematically illustrating how a cover 8 is disposed to the case 7. FIG. 20 is a schematic cross-sectional view schematically illustrating a state where the cover 8 is disposed to the case 7. FIG. 21 is a schematic cross-sectional view schematically illustrating a state where the first workpiece W1 is supported by backing components 40. FIG. 22 is a schematic cross-sectional view schematically illustrating a modification of a supply flow channel 44 formed inside a backing component 40. FIG. 23 is a schematic cross-sectional view schematically illustrating how the height of a first end 42a-1 of a first post 42-1 can be adjusted. FIG. 24 is a schematic cross-sectional view schematically illustrating how the height of a second end 42a-2 of a second post 42-2 can be adjusted. FIG. 25 is a schematic perspective view schematically illustrating a friction stir welding jig 4A according to modification 2 of embodiment 1. FIG. 26 and FIG. 27 are schematic front views schematically illustrating a part of the machine tool 1A according to embodiment 1. FIG. 28 and FIG. 29 are schematic perspective views schematically illustrating the machine tool 1A according to embodiment 1. FIG. 30 is a schematic perspective view schematically illustrating how a cutting mode M2 is executed. FIG. 31 is a diagram schematically illustrating how a controller 3 can control a plurality of control target devices. FIG. 32 and FIG. 33 are schematic front views schematically illustrating a part of the machine tool 1A according to embodiment 1. FIG. 34 is a diagram illustrating a first path PA.

As in the example illustrated in FIG. 1, the friction stir welding jig 4A according to embodiment 1 includes backing components 40, holding components 50, and at least one nozzle 61.

The backing components 40 support the joining target object W (more specifically, the first workpiece W1 serving as the joining target object). The example illustrated in FIG. 2 illustrates a state where the first workpiece W1 serving as the joining target object is supported on the backing components 40. FIG. 3 illustrates a state where the second workpiece W2 is placed on the first workpiece W1.

As in the example illustrated in FIG. 4, the backing component 40 receives pressing force from the friction stir welding tool T1 via the joining target object W (more specifically, the first workpiece W1 serving as the joining target object). In other words, while the joining target object W is being friction stirred using the friction stir welding tool T1, the backing component 40 supports the joining target object W (more specifically, the first workpiece W1 serving as the joining target object) against the pressing force received by the joining target object W from the friction stir welding tool T1.

As in the example illustrated in FIG. 2 and FIG. 3, the holding components 50 hold the joining target object W (more specifically, the first workpiece W1 serving as the joining target object).

As in the example illustrated in FIG. 4, the at least one nozzle 61 is disposed on the backing component 40. The at least one nozzle 61 sprays a coolant L1 toward the joining target object W (more specifically, the first workpiece W1 serving as the joining target object).

The friction stir welding jig 4A according to embodiment 1 includes the backing components 40 supporting the first workpiece W1 serving as the joining target object. The backing components 40 suppress deflection of the first workpiece W1 due to the pressing force from the friction stir welding tool T1.

The friction stir welding jig 4A according to embodiment 1 includes the holding components 50 holding the first workpiece W1. The holding components 50 prevent misalignment of the first workpiece W1 while the friction stir welding is being performed.

In the friction stir welding jig 4A according to embodiment 1, the at least one nozzle 61 is disposed on the backing components 40. Thus, while the friction stir welding is being performed, the coolant L1 sprayed from the at least one nozzle 61 efficiently cools the first workpiece W1. Since the at least one nozzle 61 is disposed on the backing components 40 supporting the first workpiece W1, no structure for supporting this at least one nozzle 61 needs to be provided in addition to the backing components 40. Compared with a case where the joining target object is cooled in a tank (see FIG. 6 in PTL1), the friction stir welding jig 4A can be easily prepared. Furthermore, preparation time before the friction stirring is performed can be made short.

In the example illustrated in FIG. 4, since the at least one nozzle 61 is disposed on the backing components 40, once the first workpiece W1 is positioned with respect to the friction stir welding jig 4A (more specifically, once the holding components 50 hold the first workpiece W1), the at least one nozzle 61 is positioned with respect to the first workpiece W1. Thus, the position of the at least one nozzle 61 with respect to the first workpiece W1 is easily set.

As in the example illustrated in FIG. 5, the machine tool 1A according to embodiment 1 includes the friction stir welding jig 4A, a supporter 11, a machining head 15, a rotational driver 16, a mover 17, and a supplier 12.

On the friction stir welding jig 4A, the joining target object W (more specifically, the first workpiece W1 serving as the joining target object) is fixed. The friction stir welding jig 4A includes (1) the backing components 40 receiving pressing force from the friction stir welding tool T1 via the first workpiece W1 serving as the joining target object and supporting the first workpiece W1, (2) the holding components 50 holding the first workpiece W1, and (3) the at least one nozzle 61 disposed on the backing components 40 and spraying the coolant L1 toward the first workpiece.

The supporter 11 supports the friction stir welding jig 4A. The supporter 11 may include a table 111 to which the friction stir welding jig 4A is attached.

The machining head 15 includes a spindle 151 and a support 153 supporting the spindle 151 to be rotatable about a first axis AX1. The spindle 151 can hold the friction stir welding tool T1.

The rotational driver 16 rotates the spindle 151 about the first axis AX1. The rotational driver 16 may include a motor 16m rotating the spindle 151 about the first axis AX1. In the example illustrated in FIG. 5, the machining head 15 includes the motor 16m described above.

The mover 17 moves the machining head 15 relative to the supporter 11. The mover 17 may include a machining head mover 171 for moving the machining head 15. Alternatively or additionally, the mover 17 may include a table mover 178 for moving the table 111.

The supplier 12 supplies the coolant L1 to the at least one nozzle 61. The at least one nozzle 61 sprays the coolant L1 toward the first workpiece W1 while the friction stirring is performed on the first workpiece W1 using the friction stir welding tool T1.

The machine tool 1A according to embodiment 1 provides the same effects as the friction stir welding jig 4A according to embodiment 1.

### (Optional Configurations)

Next, with reference to FIG. 1 to FIG. 34, optional configurations that can be adopted in the friction stir welding jig 4A and the machine tool 1A according to embodiment 1 will be described.

### (Nozzle 61)

In the example illustrated in FIG. 4, the at least one nozzle 61 jets the coolant L1 toward the joining target object W (more specifically, the first workpiece W1 serving as the joining target object).

In the example illustrated in FIG. 4, the at least one nozzle 61 includes a spray nozzle SN that disperses the coolant L1 toward the joining target object W (more specifically, the first workpiece W1 serving as the joining target object). When the spray nozzle SN is used, the first workpiece W1 can be cooled over a wide range. Thus, the number of nozzles 61 required for cooling the first workpiece W1 can be small. Furthermore, the at least one nozzle 61 needs not to be moved in accordance with the position where the friction stirring is performed.

As in the example illustrated in FIG. 6, the spray nozzle SN may be configured to disperse the coolant L1 into a fan shape. Alternatively, the spray nozzle SN may be configured to disperse the coolant L1 into a conical shape.

In the example illustrated in FIG. 1, the backing component 40 has the first post 42-1. The backing component 40 may have the second post 42-2.

In the example illustrated in FIG. 4, the at least one nozzle 61 includes a first nozzle 61a disposed on the backing component 40 (more specifically, the first post 42-1). The first nozzle 61a may be a first spray nozzle SN1 that disperses the coolant L1 toward the joining target object W (more specifically, the first workpiece W1 serving as the joining target object).

In the example illustrated in FIG. 1, the at least one nozzle 61 includes a second nozzle 61b. The second nozzle 61b may be a second spray nozzle that disperses the coolant L1 toward a joining target object (more specifically, the first workpiece W1 serving as the joining target object).

In the example illustrated in FIG. 1, the second nozzle 61b is disposed on the first post 42-1. Alternatively or additionally, the friction stir welding jig 4A may include a nozzle 61d (see FIG. 7) disposed on the second post 42-2 (more specifically, a side surface of the second post 42-2). The nozzle 61d disposed on the second post 42-2 sprays the coolant L1 toward the first workpiece W1.

In the example illustrated in FIG. 1, the at least one nozzle 61 (for example, the spray nozzle SN) is attached to a side surface 43 of the backing component 40.

Generally, a side region of the backing component 40 is a dead space. If the at least one nozzle 61 is attached to the side surface 43 of the backing component 40, the at least one nozzle 61 is disposed in this dead space.

In the example illustrated in FIG. 1, the friction stir welding jig 4A may include at least two nozzles (61a, 61b) disposed on the backing component 40 and spraying the coolant L1 toward the first workpiece W1. As in the example illustrated in FIG. 1, the friction stir welding jig 4A may include the first nozzle 61a disposed on a first side surface (more specifically, a first side surface 43a of the first post 42-1) of the backing component 40. The friction stir welding jig 4A may include the second nozzle 61b disposed on a second side surface (more specifically, a second side surface 43b of the first post 42-1) of the backing component 40.

As in the example illustrated in FIG. 1, the friction stir welding jig 4A may include at least three nozzles (61a, 61b, 61c) disposed on the backing component 40 and spraying the coolant L1 toward the first workpiece W1. As in the example illustrated in FIG. 1, the friction stir welding jig 4A may include a third nozzle 61c disposed on a third side surface (more specifically, a third side surface 43c of the first post 42-1) of the backing component 40. In the example illustrated in FIG. 1, the third side surface 43c is a surface on the side opposite to the second side surface 43b.

In the example illustrated in FIG. 10, the supply flow channel 44 for supplying the coolant L1 to the at least one nozzle 61 is formed inside the backing component 40.

Even if the backing component 40 is provided with a cavity, this cavity is not generally used as a flow channel. If the supply flow channel 44 is formed inside the backing component 40, an internal region of the backing component is used as the supply flow channel 44. With the supply flow channel 44 formed inside the backing component 40, the side region of the backing component 40 is simplified. For example, the supply flow channel 44 may be formed inside the backing component 40, instead of disposing a hose, for suppling the coolant L1, in the side region of the backing component 40.

As in the example illustrated in FIG. 10, a case is assumed where heat produced by friction stirring is transmitted from the first workpiece W1 to the backing component 40. In this case, due to the coolant L1 flowing in the supply flow channel 44 inside the backing component 40, temperature rise of the backing component 40 is suppressed. When the temperature rise of the backing component 40 is suppressed, temperature rise of a region G in the first workpiece W1 coming into contact with the backing component 40 is also suppressed.

### (Coolant L1)

The coolant L1 is, for example, a water-soluble coolant. The main component of the water-soluble coolant is water, for example. The water-soluble coolant may include a water-soluble fluid (for example, a water-soluble cutting fluid or a water-soluble grinding fluid) and/or a surfactant.

The coolant L1 may be a liquid with the same components as the cutting fluid used for a workpiece (for example, the first workpiece W1 or other workpieces) when the workpiece (for example, the first workpiece W1 or other workpieces) is being cut.

In the example illustrated in FIG. 10, the nozzle 61 sprays the coolant L1 from the backing component 40 to the first workpiece W1. Additionally, as in the example illustrated in FIG. 11, the machine tool 1A may include a nozzle 62 for spraying a coolant from a component other than the backing component to the first workpiece W1.

In this specification, a plurality of nozzles disposed on the backing component 40 are defined as a first group of nozzles 61, and a plurality of nozzles disposed on a component other than the backing component 40 are defined as a second group of nozzles 62. In the example illustrated in FIG. 11, the friction stir welding jig 4 includes the first group of nozzles 61 disposed on the backing component 40 and the second group of nozzles 62 disposed on a component other than the backing component 40 (for example, a base 64).

As in the example illustrated in FIG. 13, the second group of nozzles 62 spray the coolant L1 onto an outer surface of the first workpiece W1. The second group of nozzles 62 may spray the coolant L1 to an outer side surface Wt of the first workpiece W1. Alternatively or additionally, the second group of nozzles 62 may spray the coolant L1 to the second workpiece W2.

### (First Workpiece W1 and Second Workpiece W2)

In the example illustrated in FIG. 3, the friction stir welding jig 4A supports the first workpiece W1 and supports the second workpiece W2 joined to the first workpiece W1 by friction stirring. In the example illustrated in FIG. 9, the friction stir welding jig 4A supports the second workpiece W2 via the first workpiece W1. More specifically, the backing component 40 supports the first workpiece W1, whereas the first workpiece W1 supports the second workpiece W2.

In the example illustrated in FIG. 9, the first workpiece W1 has an end wall 73 supported by the backing component 40.

In the example illustrated in FIG. 9, the first workpiece W1 serving as the joining target object is the case 7. The first workpiece W1 (more specifically, the case 7) is joined to the second workpiece W2 by friction stirring.

In the example illustrated in FIG. 9, the second workpiece W2 is the cover 8. In the example illustrated in FIG. 9, the case 7 is a first joining target object, and the cover 8 is a second joining target object. The first joining target object (for example, the case 7) and the second joining target object (for example, the cover 8) are joined by friction stirring.

In the example illustrated in FIG. 17, the case 7 includes side walls 71 and the end wall 73. The case 7 further has a recess 74 defined by the side walls 71 and the end wall 73. In the example illustrated in FIG. 17, the end wall 73 is a bottom wall 730 defining the bottom of the recess 74. In the example illustrated in FIG. 17, the side walls 71 and the end wall 73 are formed by integral molding. Alternatively, the end wall 73 may be attached to the side walls 71. In the example illustrated in FIG. 17, the case 7 has a box shape.

In the example illustrated in FIG. 17, the side walls 71 include a first side wall 71-1 and a second side wall 71-2. The second side wall 71-2 is disposed opposite to the first side wall 71-1.

The side walls 71 may include the first side wall 71-1, the second side wall 71-2, a third side wall 71-3, and a fourth side wall 71-4. In the example illustrated in FIG. 17, the third side wall 71-3 connects the first side wall 71-1 and the second side wall 71-2. In the example illustrated in FIG. 17, the fourth side wall 71-4 connects the first side wall 71-1 and the second side wall 71-2. The fourth side wall 71-4 is disposed opposite to the third side wall 71-3.

The side walls 71 may include a protrusion (for example, a collar 72) held by the holding components 50. In the example illustrated in FIG. 9, the first side wall 71-1 includes a first flange 72-1 held by a first holding component 51a. The second side wall 71-2 includes a second flange 72-2 held by a second holding component 51b. In the example illustrated in FIG. 17, the first flange 72-1 and the second flange 72-2 each form a part of the collar 72.

In the example illustrated in FIG. 9, the first direction DR1 matches a direction toward an inner space SP of the recess 74 from the end wall 73.

In the example illustrated in FIG. 9, the end wall 73 is a wall disposed at end portions of the side walls 71 on the second direction DR2 side. In the example illustrated in FIG. 9, the end wall 73 is connected to an end portion of the first side wall 71-1 on the second direction DR2 side, and is connected to an end portion of the second side wall 71-2 on the second direction DR2 side.

In the example illustrated in FIG. 17, the case 7 has a recess 74 that can receive a cooling target object. The cooling target object received in the recess 74 is electrical equipment that produces heat in response to a current flow, for example. The case 7 may be an automobile part (for example, a part of an electric vehicle) installed in an automobile with the electrical equipment contained therein. The electrical equipment producing heat in response to a current flow is contained in the recess 74 while being in contact with the end wall 73, for example.

The cooling target object (more specifically, electrical equipment) received in the recess 74 is, for example, an inverter (more specifically, a device including a circuit for converting direct current into alternating current), a converter (more specifically, an AC-DC converter for converting alternating current into direct current, or a DC-DC converter for converting a DC voltage into another DC voltage), a battery, a charger for charging a battery, a control unit such as an engine control unit, or a substrate carrying a plurality of electronic parts.

The case 7 is a casted part, for example. The side walls 71, the end wall 73, and the recess 74 may be formed by casting. Alternatively, the side walls 71, the end wall 73, and the recess 74 may be formed by cutting a block using a cutting tool.

The case 7 may include attachment portions 75 where a lid CB (see FIG. 18) covering the recess 74 can be attached. In the example illustrated in FIG. 17, the attachment portions 75 have holes 75h for receiving bolts. The attachment portions 75 may be formed by casting. The outer shape of the attachment portions 75 may be formed by casting, and the holes 75h of the attachment portions 75 may be formed by cutting (more specifically, perforation).

As in the example illustrated in FIG. 18, the lid CB is fixed to the case 7, after the cooling target object described above is contained in the recess 74. The lid may be fixed to the case 7 by inserting bolts into the holes 75h (see FIG. 17). Alternatively, the lid may be fixed to the case 7 by friction stir welding.

As in the example illustrated in FIG. 19, the case 7 may have a groove 73v formed in an outer surface 73t of the end wall 73. In the example illustrated in FIG. 17 and FIG. 19, the groove 73v is disposed on the side opposite to the recess 74, with reference to the end wall 73. More specifically, the groove 73v is formed in the outer surface 73t of the end wall 73, and an inner surface 73n of the end wall 73 defines the bottom surface of the recess 74.

The groove 73v of the end wall 73 may be formed by casting. Alternatively, the groove 73v may be formed by cutting the end wall 73 using a cutting tool. As in the example illustrated in FIG. 19, the groove 73v may be segmented by at least one projection 73p.

The case 7 may include a first port 79a continuous with the groove 73v. The case 7 may include the first port 79a continuous with the groove 73v and a second port 79b continuous with the groove 73v. When the coolant L1 may possibly enter the groove 73v from the first port 79a, the first port 79a may be covered by a lid during the friction stir welding. When the coolant L1 may possibly enter the groove 73v from the second port 79b, the second port 79b may be covered by a lid during the friction stir welding.

The case 7 is made of metal, for example. The main component of the material of the case 7 is aluminum, for example. In other words, the case 7 is made of aluminum or made of an aluminum alloy.

In the example illustrated in FIG. 19, the cover 8 covers at least part of the outer surface 73t of the end wall 73 of the case 7. In the example illustrated in FIG. 19, the cover 8 covers the groove 73v of the end wall 73.

In the example illustrated in FIG. 19, the cover 8 has a flat shape. Alternatively, the cover 8 may include a recess or a protrusion.

The cover 8 is made of metal, for example. The main component of the material of the cover 8 is aluminum, for example. In other words, the cover 8 is made of aluminum or made of an aluminum alloy.

As in the example illustrated in FIG. 20, the end wall 73 of the case 7 may include a step 731 disposed to face an outer edge 81 of the cover 8. In this case, the step 731 of the end wall 73 and the outer edge 81 of the cover 8 may be configured to be butt-joined by friction stirring.

In the example illustrated in FIG. 20, the case 7 inverted is supported by the backing component 40. Some of the plurality of posts 42 may support the end wall 73 of the case 7 in the vicinity of the side walls 71.

### (Backing Component 40)

In the example illustrated in FIG. 9, the backing component 40 includes the first post 42-1 that supports the joining target object W (more specifically, the first workpiece W1 serving as the joining target object). The backing component 40 may include a plurality of posts 42 including the first post 42-1 and the second post 42-2. Each of the plurality of posts 42 receives pressing force from the friction stir welding tool T1 via the joining target object (more specifically, the first workpiece W1 serving as the joining target object). In other words, while the first workpiece W1 is being friction stirred using the friction stir welding tool T1, each of the plurality of posts 42 supports the first workpiece W1 against the pressing force received by the first workpiece W1 from the friction stir welding tool T1.

In the example illustrated in FIG. 8, the number of posts 42 of the backing component 40 is nine. Alternatively, the number of posts 42 of the backing component 40 may be one, two, three, four, five, six, seven, eight, or ten or more. In the example illustrated in FIG. 8, the first post 42-1 is surrounded by a plurality of other posts 42 as viewed in a direction along the first direction DR1 (more specifically, in plan view).

In the example illustrated in FIG. 9, the backing component 40 includes the first post 42-1 and the second post 42-2. In the example illustrated in FIG. 9, the first post 42-1 extends along the second direction DR2, and the second post 42-2 extends along the second direction DR2. In the example illustrated in FIG. 1, the backing component 40 includes a third post 42-3 and a fourth post 42-4. In the example illustrated in FIG. 1, the third post 42-3 extends along the second direction DR2, and the fourth post 42-4 extends along the second direction DR2. In the example illustrated in FIG. 1, the backing component 40 includes a fifth post 42-5 and a sixth post 42-6. In the example illustrated in FIG. 1, the fifth post 42-5 extends along the second direction DR2, and the sixth post 42-6 extends along the second direction DR2.

In the example illustrated in FIG. 21, the first post 42-1 includes the first end 42a-1 coming into contact with the first workpiece W1 (for example, the inner surface 73n of the end wall 73). In the example illustrated in FIG. 21, the second post 42-2 includes the second end 42a-2 coming into contact with the first workpiece W1 (for example, the inner surface 73n of the end wall 73).

In the example illustrated in FIG. 21, the position of the first end 42a-1 is different from the position of the second end 42a-2 in the direction along the first direction DR1. More specifically, the second end 42a-2 is positioned more on the first direction DR1 side (more specifically, the lower side) than the first end 42a-1. In the example illustrated in FIG. 21, the first direction DR1 is a downward direction. In the example illustrated in FIG. 21, the second end 42a-2 has a lower height than the first end 42a-1.

With the position of the first end 42a-1 being different from the position of the second end 42a-2 in the direction along the first direction DR1 (more specifically, with the height of the first end 42a-1 being different from the height of the second end 42a-2), the plurality of posts 42 including the first post 42-1 and the second post 42-2 can suitably support the first workpiece W1 having a relatively complex shape.

In the example illustrated in FIG. 21, a first supply flow channel 44-1 for supplying the coolant L1 to the first nozzle 61a is formed inside the first post 42-1. As in the example illustrated in FIG. 21, a second supply flow channel 44-2 for supplying the coolant L1 to the second nozzle 61b (see FIG. 8) may be formed inside the first post 42-1. As in the example illustrated in FIG. 7, a third supply flow channel 44-3 for supplying the coolant L1 to another nozzle 61d may be formed inside the second post 42-2.

As in the example illustrated in FIG. 22, part of the first supply flow channel 44-1 for supplying the coolant L1 to the first nozzle 61a and part of the second supply flow channel 44-2 for supplying the coolant L1 to the second nozzle 61b may be integrated.

In the example illustrated in FIG. 21, the friction stir welding jig 4A includes the base 64 supporting the backing component 40. In the example illustrated in FIG. 21, the base 64 supports a plurality of posts 42 including the first post 42-1 and the second post 42-2. The base 64 can be attached to the supporter 11 of the machine tool 1A. The base 64 can be detached from the supporter 11 of the machine tool 1A.

In the example illustrated in FIG. 21, the backing component 40 includes a support end 40e coming into contact with the first workpiece W1 (for example, the inner surface of the case 7). In the example illustrated in FIG. 23, the position of the support end 40e relative to the base 64 is adjustable in the first direction DR1. The position of the support end 40e relative to the base 64 is adjustable in the second direction DR2. With the position of the support end 40e relative to the base 64 being adjustable in the first direction DR1 and the second direction DR2, the position of the support end 40e can be finely adjusted for a manufacturing error of the first workpiece W1. Alternatively, when a target object supported by the friction stir welding jig 4A is switched from the first workpiece W1 to another workpiece having a shape different from the first workpiece W1, the position of the support end 40e relative to the base 64 may be finely adjusted. In other words, the position of the support end 40e relative to the base 64 may be adjustable so that the backing component 40 can be used for a plurality of types of workpieces.

In the example illustrated in FIG. 23, the position of the first end 42a-1 of the first post 42-1 relative to the base 64 is adjustable in the first direction DR1(and the second direction DR2). In the example illustrated in FIG. 24, the position of the second end 42a-2 of the second post 42-2 relative to the base 64 is adjustable in the first direction DR1(and the second direction DR2).

As in the example illustrated in FIG. 23, the first post 42-1 may be extendable. More specifically, the first post 42-1 may include a first portion 421-1 fixed to the base 64 and a second portion 421-2 movable relative to the first portion 421-1 in the second direction DR2 (for example, the upper direction). In the example illustrated in FIG. 23, the first end 42a-1 described above is disposed on the second portion 421-2. The first nozzle 61a described above is disposed on the second portion 421-2.

When the first post 42-1 is extended, the position of the first end 42a-1 of the first post 42-1 is adjusted in a direction away from the base 64 (in other words, in the second direction DR2). When the first post 42-1 is contracted, the position of the first end 42a-1 of the first post 42-1 is adjusted in a direction toward the base 64 (in other words, in the first direction DR1).

The first post 42-1 may include a first spring 64-1 that biases the second portion 421-2 in the second direction DR2 (for example, the upper direction). Alternatively or additionally, the first post 42-1 may include a fluid pressure cylinder (for example, an air cylinder or a hydraulic cylinder) for moving the second portion 421-2 in the second direction DR2 (for example, the upper direction).

In the example illustrated in FIG. 23, when the second portion 421-2 is pressed by the first workpiece W1 (for example, the case 7), the first spring 64-1 is contracted. Thus, the height of the second portion 421-2 is automatically adjusted for the shape of the first workpiece W1 or a manufacturing error of the first workpiece W1.

As in the example illustrated in FIG. 22, the first post 42-1 may include a first fixing component 65-1 that fixes the position of the second portion 421-2 relative to the first portion 421-1. In this case, after the height of the second portion 421-2 is adjusted, the height of the second portion 421-2 can be fixed using the first fixing component 65-1.

In the example illustrated in FIG. 9, when the first workpiece W1 is held by the holding components 50, the first fixing component 65-1 is disposed more on the first direction DR1 side than the first workpiece W1. In this case, with the first workpiece W1 held by the holding components 50, the operator can easily access the first fixing component 65-1. In the example illustrated in FIG. 9, in the direction along the first direction DR1, the first fixing component 65-1 is disposed between a lower base 641 and an upper base 646.

As in the example illustrated in FIG. 24, the second post 42-2 may be extendable. More specifically, the second post 42-2 may include a third portion 421-3 fixed to the base 64 and a fourth portion 421-4 movable relative to the third portion 421-3 in second direction DR2 (for example, the upper direction). In the example illustrated in FIG. 24, the second end 42a-2 described above is disposed on the fourth portion 421-4.

When the second post 42-2 is extended, the position of the second end 42a-2 of the second post 42-2 is adjusted in a direction away from the base 64 (in other words, in the second direction DR2). When the second post 42-2 is contracted, the position of the second end 42a-2 of the second post 42-2 is adjusted in a direction toward the base 64 (in other words, in the first direction DR1).

The second post 42-2 may include a second spring 64-2 that biases the fourth portion 421-4 in the second direction DR2 (for example, the upper direction). Alternatively or additionally, the second post 42-2 may include a fluid pressure cylinder (for example, an air cylinder or a hydraulic cylinder) for moving the fourth portion 421-4 in the second direction DR2 (for example, the upper direction).

As in the example illustrated in FIG. 22, the second post 42-2 may include a second fixing component 65-2 that fixes the position of the fourth portion 421-4 relative to the third portion 421-3. In this case, after the height of the fourth portion 421-4 is adjusted, the height of the fourth portion 421-4 can be fixed using the second fixing component 65-2.

In the example illustrated in FIG. 9, when the first workpiece W1 is held by the holding components 50, the second fixing component 65-2 is disposed more on the first direction DR1 side than the first workpiece W1. In this case, with the first workpiece W1 held by the holding components 50, the operator can easily access the second fixing component 65-2. In the example illustrated in FIG. 9, in the direction along the first direction DR1, the second fixing component 65-2 is disposed between the lower base 641 and the upper base 646.

When the plurality of posts 42 include the third post 42-3 and the fourth post 42-4, each of the third post 42-3 and the fourth post 42-4 may be extendable. When the plurality of posts 42 include the fifth post 42-5 and the sixth post 42-6, each of the fifth post 42-5 and the sixth post 42-6 may be extendable.

In the example illustrated in FIG. 4, the backing component 40 supports an end wall (for example, the end wall 73 of the case 7) of the first workpiece W1. In the example illustrated in FIG. 4, with the end wall of the first workpiece W1 supported by the backing component 40, the friction stirring can be performed on the end wall of the first workpiece W1. More specifically, with the end wall 73 of the case 7 supported by the backing component 40, the friction stir welding can be performed on the end wall 73 of the case 7 and the cover 8.

### (Base 64)

In the example illustrated in FIG. 25, the base 64 includes the lower base 641 and the upper base 646. The base 64 includes a plurality of connection posts 647 connecting the lower base 641 and the upper base 646. In the example illustrated in FIG. 25, the lower base 641 is disposed on the first direction DR1 side of the upper base 646. In the upper base 646, a through hole 646h (see FIG. 8) through which the backing component 40 passes may be formed.

In the example illustrated in FIG. 25, the lower base 641 supports the backing component 40. In the example illustrated in FIG. 25, the holding components 50 are disposed on the upper base 646.

In the example illustrated in FIG. 26, the base 64 (more specifically, the lower base 641) is attached to the supporter 11 (more specifically, the table 111). In the example illustrated in FIG. 26, the machine tool 1A includes a fixing component F fixing the base 64 (more specifically, the lower base 641) to the supporter 11 (more specifically, the table 111). The fixing component F is, for example, a bolt F1. In the example illustrated in FIG. 25, the base 64 (more specifically, the lower base 641) includes an attachment hole 64h. The base 64 may fixed to the table 111, with the bolt F1 inserted in the attachment hole 64h.

As in the example illustrated in FIG. 25, the base 64 (more specifically, the upper base 646) may support the second group of nozzles 62.

### (Holding Components 50)

In the example illustrated in FIG. 4, the holding components 50 hold the side walls (for example, the side walls 71 of the case 7) of the first workpiece W1. In the example illustrated in FIG. 4, with the side walls 71 of the first workpiece W1 held by the holding components 50, the friction stirring can be performed on the end wall 73 of the first workpiece W1. More specifically, with the side walls 71 of the case 7 held by the holding components 50, the friction stir welding can be performed on the end wall 73 of the case 7 and the cover 8.

In the example illustrated in FIG. 9, the holding components 50 include the first holding component 51a that holds a first portion of the first workpiece W1 (more specifically, the first side wall 71-1 of the case 7) and the second holding component 51b that holds a second portion of the first workpiece W1 portion (more specifically, the second side wall 71-2 of the case 7).

In the example illustrated in FIG. 9, the backing component 40 is disposed to cross a space SP1 between the first holding component 51a and the second holding component 51b.

In the example illustrated in FIG. 9, the support end 40e of the backing component 40 is disposed more on the second direction DR2 side (more specifically, the upper side) than the holding components 50. More specifically, the first end 42a-1 of the first post 42-1 is disposed more on the second direction DR2 side (more specifically, the upper side) than the first holding component 51a and the second holding component 51b. The second end 42a-2 of the second post 42-2 is disposed more on the second direction DR2 side (more specifically, the upper side) than the first holding component 51a and the second holding component 51b.

In the example illustrated in FIG. 9, the first holding component 51a includes a first movable portion 513a with its position changeable with respect to a first fixed portion 511a (for example, part of the upper base 646). When the first movable portion 513a moves toward the first fixed portion 511a, the first portion of the first workpiece W1 (more specifically, the first side wall 71-1 of the case 7) is clamped by the first fixed portion 511a and the first movable portion 513a. The first movable portion 513a may be screwed to a first screw component SB1. In this case, when the first screw component SB1 is rotated relative to the first movable portion 513a, the first movable portion 513a moves toward the first fixed portion 511a. Alternatively, the first holding component 51a may include a fluid pressure cylinder (for example, an air cylinder or a hydraulic cylinder) for moving the first movable portion 513a toward the first fixed portion 511a.

In the example illustrated in FIG. 9, the second holding component 51b includes a second movable portion 513b with its position changeable with respect to a second fixed portion 511b (for example, another part of the upper base 646). When the second movable portion 513b moves toward the second fixed portion 511b, the second portion of the first workpiece W1 (more specifically, the second side wall 71-2 of the case 7) is clamped by the second fixed portion 511b and the second movable portion 513b. The second movable portion 513b may be screwed to a second screw component SB2. In this case, when the second screw component SB2 is rotated relative to the second movable portion 513b, the second movable portion 513b moves toward the second fixed portion 511b. Alternatively, the second holding component 51b may include a fluid pressure cylinder (for example, an air cylinder or a hydraulic cylinder) for moving the second movable portion 513b toward the second fixed portion 511b.

In the example illustrated in FIG. 8, the friction stir welding jig 4A includes four or more holding components 50 that are disposed around the backing component 40 and hold the first workpiece W1. More specifically, ten holding components 50 holding the first workpiece W1 are disposed around the backing component 40. The number of holding components 50 disposed around the backing component 40 may be four, five, six, seven, eight, nine, or eleven or more.

In the example illustrated in FIG. 8, the holding components 50 (for example, the first holding component 51a and the second holding component 51b) are supported by the base 64 (more specifically, the upper base 646).

### (Fall-Prevention Component 67)

In the example illustrated in FIG. 13, the friction stir welding jig 4A includes fall-prevention components 67 for preventing the second workpiece W2 (for example, the cover 8) from falling off the first workpiece W1 (for example, the case 7). In the example illustrated in FIG. 12 and FIG. 13, the position of the fall-prevention components 67 is changeable between an advanced position P1 in contact with the second workpiece W2 (for example, the cover 8) and a retracted position P2 separated from the second workpiece W2 (for example, the cover 8).

The friction stir welding jig 4A may include actuators 68 for moving the fall-prevention components 67 between the advanced position P1 described above and the retracted position P2 described above. Upon receiving a first operation instruction from the controller 3, the actuators 68 may move the fall-prevention components 67 from the advanced position P1 described above and the retracted position P2 described above. Upon receiving a second operation instruction from the controller 3, the actuators 68 may move the fall-prevention components 67 from the retracted position P2 described above to the advanced position P1 described above.

As in the example illustrated in FIG. 12, the fall-prevention components 67 may include a first fall-prevention component 67-1 and a second fall-prevention component 67-2. The friction stir welding jig 4A may include a first actuator 68-1 for moving the first fall-prevention component 67-1 between a first advanced position P1-1 in contact with the second workpiece W2 (for example, the cover 8) and a first retracted position P2-1 separated from the second workpiece W2 (for example, the cover 8). The friction stir welding jig 4A may include a second actuator 68-2 for moving the second fall-prevention component 67-2 between a second advanced position P1-2 in contact with the second workpiece W2 (for example, the cover 8) and a second retracted position P2-2 separated from the second workpiece W2 (for example, the cover 8).

In the example illustrated in FIG. 12, the fall-prevention components 67 (for example, the first fall-prevention component 67-1 and the second fall-prevention component 67-2) are supported by the base 64 (more specifically, the upper base 646).

### (Machine Tool 1A)

In the example illustrated in FIG. 26, the machine tool 1A includes the friction stir welding jig 4A on which the joining target object W (more specifically, the first workpiece W1 serving as the joining target object) is fixed, the supporter 11, the machining head 15, the rotational driver 16, the mover 17, and the supplier 12 (not illustrated in FIG. 26). Since the friction stir welding jig 4A has already been described, redundant description on the friction stir welding jig 4A will be omitted.

The supporter 11 supports the friction stir welding jig 4A. The supporter 11 may include the table 111, to which the friction stir welding jig 4A is attached.

The machining head 15 includes the spindle 151 and the support 153 supporting the spindle 151 to be rotatable about the first axis AX1. The spindle 151 can hold the friction stir welding tool T1.

The rotational driver 16 rotates the spindle 151 about the first axis AX1. The rotational driver 16 may include the motor 16m rotating the spindle 151 about the first axis AX1. In the example illustrated in FIG. 26, the machining head 15 includes the motor 16m described above.

The mover 17 moves the machining head 15 relative to the supporter 11. The mover 17 may include the machining head mover 171 for moving the machining head 15. In the example illustrated in FIG. 26 and FIG. 27, the machining head mover 171 can move the machining head 15 in a direction (Z direction) substantially parallel with the vertical direction. The machining head mover 171 may move the machining head 15 in a direction substantially parallel with the horizontal plane.

The mover 17 may include the table mover 178 for moving the table 111. In the example illustrated in FIG. 26 and FIG. 27, the table mover 178 can move the table 111 in a direction substantially parallel with the horizontal plane. In the example illustrated in FIG. 26 and FIG. 27, the table mover 178 includes an X-axis mover 178a for moving the table 111 in a direction along the X axis, which is substantially parallel with the horizontal plane. The table mover 178 may include a Y-axis mover 178b for moving the table 111 in a direction along the Y axis, which is perpendicular to both the vertical direction and the X axis.

The supplier 12 (not illustrated in FIG. 26) supplies the coolant L1 to the at least one nozzle 61. The at least one nozzle 61 sprays the coolant L1 toward the first workpiece W1 while the friction stirring is performed on the first workpiece W1 using the friction stir welding tool T1.

### (Wall 21 and Door 23)

As in the example illustrated in FIG. 28 and FIG. 29, the machine tool 1A may include a wall 21 surrounding a machining region RG1 where the friction stirring is performed. The wall 21 prevents the coolant L1 from scattering to the outside of the machining region RG1 where the friction stirring is performed. The wall 21 surrounds the friction stir welding jig 4. The wall 21 surrounds a lower end portion 15g (see FIG. 26) of the machining head 15. In the example illustrated in FIG. 28 and FIG. 29, the wall 21 surrounds the table 111.

As in the example illustrated in FIG. 28 and FIG. 29, an opening OP through which the first workpiece W1 (for example, the case 7) and the second workpiece W2 (for example, the cover 8) can pass may be formed in the wall 21. In the example illustrated in FIG. 28 and FIG. 29, the machine tool 1A includes a door 23 that opens and closes the opening OP formed in the wall 21. The wall 21 and the door 23 surround the machining region RG1 and prevent the coolant L1 from scattering to the outside of the machining region RG1.

### (Supplier 12)

In the example illustrated in FIG. 29, the machine tool 1A includes the supplier 12 for supplying the coolant L1 to the at least one nozzle 61. The supplier 12 supplies the coolant L1 to the first group of nozzles 61 disposed on the backing component 40. The supplier 12 may supply the coolant L1 to the second group of nozzles 62 disposed on a component other than the backing component 40 (for example, the upper base 646).

In the example illustrated in FIG. 29, the supplier 12 includes a pump 121 for supplying the coolant L1 to the at least one nozzle 61. The supplier 12 may include a valve 123 disposed between the at least one nozzle 61 and the pump 121.

### (Circulation of Coolant L1)

As in the example illustrated in FIG. 29, the machine tool 1A may include a circulation flow channel 13 for circulating the coolant L1 and a tank 141 for storing the coolant L1.

The circulation flow channel 13 includes a flow channel 131 for supplying the coolant L1 to the at least one nozzle 61 from the tank 141.

The circulation flow channel 13 includes a return flow channel 138 for returning the coolant L1 inside the machining region RG1 where the friction stirring described above is performed, to the tank 141. With the machining region RG1 surrounded by the wall 21, the coolant L1 can be smoothly collected.

### (Chiller 143)

The machine tool 1A may include a chiller 143 that reduces the temperature of the coolant L1. In the example illustrated in FIG. 29, the chiller 143 receives the coolant L1 from the tank 141, and reduces the temperature of the coolant L1 received. The coolant L1 with the temperature reduced is returned to the tank 141.

### (Cutting Tool T2)

As in the example illustrated in FIG. 30, the machine tool 1A may be capable of cutting at least one of the first workpiece W1 (for example, the case 7) and the second workpiece W2 (for example, the cover 8) using a cutting tool T2. More specifically, the spindle 151 may be capable of holding the cutting tool T2.

For example, when the friction stir welding tool T1 generates burrs from at least one of the first workpiece W1 (for example, the case 7) and the second workpiece W2 (for example, the cover 8), the burrs may be removed using the cutting tool T2 (for example, a milling tool T2-1).

The cutting tool T2 attached to the spindle 151 may be a perforation tool T2-2 (see FIG. 26). After the friction stir welding on the first workpiece W1 (for example, the case 7) and the second workpiece W2 (for example, the cover 8), a hole may be formed in the first workpiece W1 (for example, the case 7) and/or the second workpiece W2 (for example, the cover 8) using the cutting tool T2 (for example, the perforation tool T2-2). For example, the holes 75h (see FIG. 17) of the attachment portions 75 may be formed using the perforation tool T2-2.

The cutting tool T2 attached to the spindle 151 may be a tap tool. After the friction stir welding on the first workpiece W1 (for example, the case 7) and the second workpiece W2 (for example, the cover 8), a screw thread may be formed in a hole (for example, a hole formed in the first workpiece W1), using the cutting tool T2 (for example, the tap tool).

After the friction stir welding on the first workpiece W1 (for example, the case 7) and the second workpiece W2 (for example, the cover 8), the side walls 71 of the case 7 or the inner surface of the case 7 may be cut using the cutting tool T2.

In embodiment 1, the friction stirring is performed while the coolant L1 is applied to the first workpiece W1. Thus, the warpage of the first workpiece W1 due to heat produced by the friction stirring is suppressed. Thus, the machine tool 1A can cut at least one of the first workpiece W1 and the second workpiece W2 highly precisely, after the friction stir welding on the first workpiece W1 and the second workpiece W2.

### (Automatic Tool Changer 19)

As in the example illustrated in FIG. 26 and FIG. 27, the machine tool 1A may include an automatic tool changer 19. With the automatic tool changer 19, the friction stir welding tool T1 held on the spindle 151 can be replaced with the cutting tool T2 (such as, for example, the milling tool T2-1, the perforation tool T2-2, or a tap tool).

In the example illustrated in FIG. 27, the automatic tool changer 19 has a tool change arm 191, an arm rotator 194 for rotating the tool change arm 191, and an arm mover 196 for linearly moving the tool change arm 191. The arm rotator 194 rotates the tool change arm 191 about a second axis AX2. The arm mover 196 moves the tool change arm 191 in a direction parallel with the second axis AX2.

In the example illustrated in FIG. 27, the tool change arm 191 can grip the friction stir welding tool T1 and the cutting tool T2 at the same time. In the example illustrated in FIG. 27, the tool change arm 191 includes a first gripping portion 191a for gripping the friction stir welding tool T1 and a second gripping portion 191b for gripping the cutting tool T2.

Alternatively, the tool change may be manually performed. When the machine tool 1A is a machine only capable of performing friction stir, the tool change is omitted.

### (Controller 3)

As in the example illustrated in FIG. 26, the machine tool 1A may include the controller 3 that controls the rotational driver 16 and the mover 17. Additionally, the controller 3 may control the supplier 12. Alternatively or additionally, the controller 3 may control the automatic tool changer 19. Alternatively or additionally, the controller 3 may control the actuators 68 (more specifically, the first actuator 68-1, the second actuator 68-2, and the like) for moving the fall-prevention components 67.

In the example illustrated in FIG. 31, the controller 3 includes a hardware processor 30 (hereinafter, simply referred to as the "processor 30"), a memory 32, a communication circuit 34, an inputter 36, and a display 37. The processor 30, the memory 32, the communication circuit 34, the inputter 36, and the display 37 are connected to each other via a bus 38. In the example illustrated in FIG. 31, the inputter 36 includes a touch panel 36t on the display 37. In other words, the display 37 is a display with the touch panel 36t. The inputter 36 may include buttons, switches, levers, a pointing device, and/or a keyboard.

The memory 32 is a storage medium readable by the processor 30 of the controller 3. The memory 32 may be, for example, a non-volatile or volatile semiconductor memory such as RAM, ROM, and a flash memory, a magnetic disk, or a memory of another form.

The memory 32 stores data DA and a machining program PM. By the processor 30 of the controller 3 executing the machining program PM stored in the memory 32, the controller 3 generates a control instruction. The communication circuit 34 transmits this control instruction to control target device (more specifically, the rotational driver 16, the mover 17, the supplier 12, the automatic tool changer 19, the actuators 68, and the like). Thus, by the processor 30 executing the machining program PM, the controller 3 can control the control target devices (more specifically, the rotational driver 16, the mover 17, the supplier 12, the automatic tool changer 19, the actuators 68, and the like).

### (Welding Mode M1)

As in the example illustrated in FIG. 32, the controller 3 can execute the welding mode M1. The welding mode M1 is a mode under which friction stir welding is performed on the first workpiece W1 and the second workpiece W2 using the friction stir welding tool T1. More specifically, the welding mode M1 is a mode under which the friction stir welding tool T1 in a rotation state is moved relative to the first workpiece W1 and the second workpiece W2 so that friction stir welding is performed on the first workpiece W1 and the second workpiece W2. The first workpiece W1 is, for example, the case 7 described above, and the second workpiece W2 is, for example, the cover 8 described above.

While the welding mode M1 is being executed, the controller 3 transmits a first rotation instruction R1 to the rotational driver 16. Upon receiving the first rotation instruction R1, the rotational driver 16 rotates the spindle 151, holding the friction stir welding tool T1, about the first axis AX1.

While the welding mode M1 is being executed, the controller 3 transmits a first movement instruction S1 to the mover 17. Upon receiving the first movement instruction S1, the mover 17 moves the friction stir welding tool T1 in the rotation state relative to the first workpiece W1 and the second workpiece W2 along a first path PA (see FIG. 34) specified by the machining program PM.

The first path PA may include a boundary PA1 between the first workpiece W1 and the second workpiece W2. In this case, the first workpiece W1 and the second workpiece W2 are butt-joined by friction stirring. More specifically, the first path PA may include a boundary PA1-1 between the step 731 of the case 7 (see FIG. 20) and the outer edge 81 of the cover 8 (see FIG. 20). In this case, the step 731 of the case 7 and the outer edge 81 of the cover 8 are butt-joined by friction stirring.

As can be recognized in FIGS. 19 and 34, the first path PA may include a path PA2 along the region where the first workpiece W1 and the second workpiece W2 overlap. In this case, the first workpiece W1 and the second workpiece W2 overlap and are joined by friction stirring. When the first workpiece W1 is the case 7 and the second workpiece W2 is the cover 8, the case 7 and the cover 8 are lap-joined by friction stirring. In the example illustrated in FIG. 34, the first path PA includes a path PA2-1 that passes through a center portion 83 of the cover 8. In this case, the case 7 and the center portion 83 of the cover 8 are lap-joined by friction stirring.

In the example illustrated in FIG. 10, at least one of the plurality of posts 42 (for example, the first post 42-1) is located vertically below the center portion 83 of the cover 8. More specifically, when the case 7 and the center portion 83 of the cover 8 are lap-jointed, at least one of the plurality of posts 42 supports the end wall 73 of the case 7 vertically below the friction stir welding tool T1.

In the example illustrated in FIG. 34, the first path PA includes both the boundary PA1 between the first workpiece W1 and the second workpiece W2 and the path PA2-1 passing through the center portion 83 of the second workpiece W2. In this case, the first workpiece W1 and the second workpiece W2 are butt-joined by friction stirring, and the first workpiece W1 and the center portion 83 of the second workpiece W2 are lap-joined by friction stirring.

As in the example illustrated in FIG. 10, the welding mode M1 may include friction stir welding the case 7 and the cover 8 so that a flow channel 91 (for example, a refrigerant flow channel through which the refrigerant flows) is formed by the groove 73v formed in the end wall 73 of the case 7 and the cover 8.

While the welding mode M1 is being executed, the at least one nozzle 61 (for example, the first nozzle 61a and/or the second nozzle 61b) applies the coolant L1 to the first workpiece W1 (for example, the end wall 73 of the first workpiece W1). More specifically, the at least one nozzle 61 (for example, the first nozzle 61a and/or the second nozzle 61b) jets the coolant L1 to the first workpiece W1 (for example, the end wall 73 of the first workpiece W1).

While the welding mode M1 is being executed, the at least one nozzle 61 may be configured to spray the coolant L1 so that the coolant L1 reaches substantially the entire inner surface 73n of the end wall 73, excluding the portion of the inner surface 73n of the end wall 73 in contact with the backing component 40. As in the example illustrated in FIG. 13, during the execution of the welding mode M1, the second group of nozzles 62 may jet the coolant L1 to the outer surface of the first workpiece W1.

As in the example illustrated in FIG. 32, while the welding mode M1 is being executed, the controller 3 may transmit a supply instruction U1 to the supplier 12. Upon receiving the supply instruction U1, the supplier 12 (for example, the pump 121 and/or the valve 123) supplies the coolant L1 to the at least one nozzle 61 (for example, the first nozzle 61a and/or the second nozzle 61b). The at least one nozzle 61 (for example, the first nozzle 61a and/or the second nozzle 61b) sprays the coolant L1, supplied by the supplier 12, to the first workpiece W1 (for example, the inner surface 73n of the end wall 73 of the first workpiece W1).

Alternatively, the supplier 12 (for example, the pump 121 and/or the valve 123) may be manually operated by the operator. More specifically, the machine tool 1A may be equipped with a manual switch for operating the supplier 12.

While the friction stirring described above is being performed, the coolant L1 may be applied only to the first workpiece W1 (for example, the case 7), of the first workpiece W1 (for example, the case 7) and the second workpiece W2 (for example, the cover 8). When the coolant L1 does not reach the second workpiece W2, the coolant L1 will not enter the gap between the first workpiece W1 and the second workpiece W2.

As in the example illustrated in FIG. 13, the welding mode M1 may start with the fall-prevention components 67 described above being at the advanced position P1 in contact the second workpiece W2 (for example, the cover 8). More specifically, with the fall-prevention components 67 described above positioned at the advanced position P1 in contact with the second workpiece W2 (for example, the cover 8), friction stirring on the first workpiece W1 (for example, the case 7) and the second workpiece W2 (for example, the cover 8) using the friction stir welding tool T1 may start. In this case, the second workpiece W2 is prevented from falling off the first workpiece W1 when the friction stirring starts.

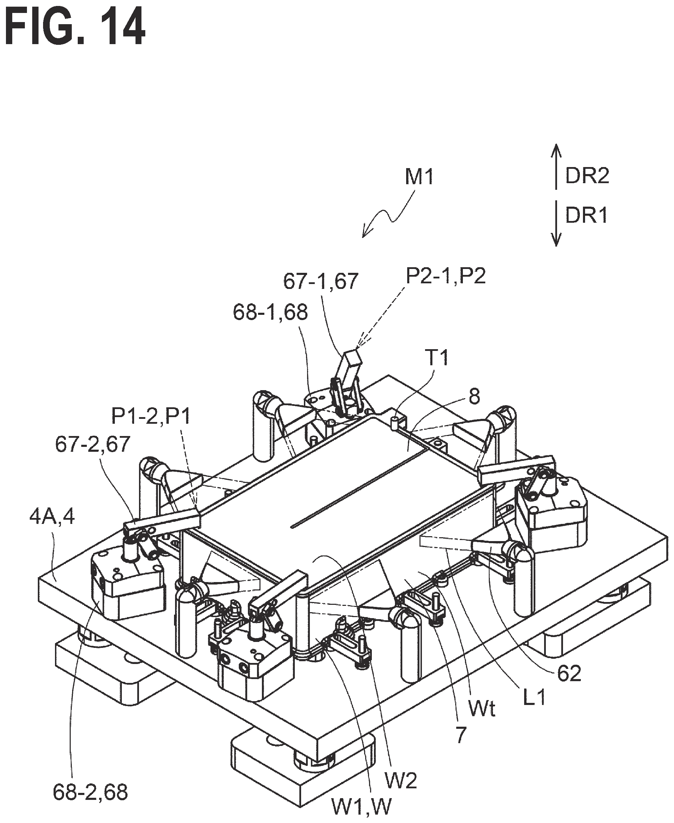

As in the example illustrated in FIG. 13 and FIG. 14, the welding mode M1 may include moving the fall-prevention components 67 from the advanced position P1 described above to the retracted position P2 described above (in other words, the retracted position P2 separated from the second workpiece W2). More specifically, while the welding mode M1 is being executed, the controller 3 may transmit a first operation instruction A1 (see FIG. 31) to the actuators 68 to move the fall-prevention components 67 from the advanced position P1 described above to the retracted position P2 described above. Upon receiving the first operation instruction A1, the actuators 68 move the fall-prevention components 67 from the advanced position P1 described above to the retracted position P2 described above.

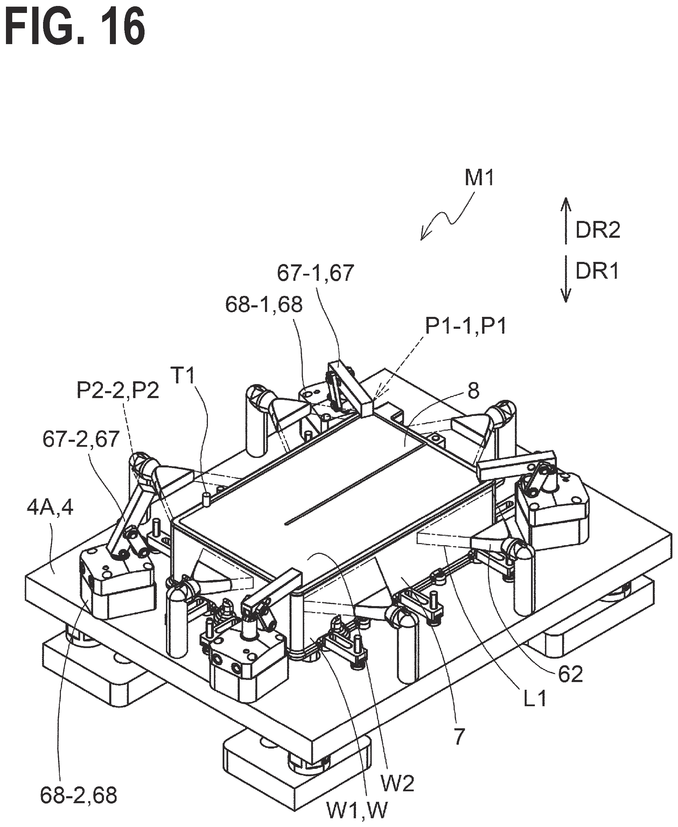

As in the example illustrated in FIGS. 14 and 16, the welding mode M1 may include moving the fall-prevention components 67 from the retracted position P2 described above to the advanced position P1 described above. More specifically, while the welding mode M1 is being executed, the controller 3 may transmit a second operation instruction to the actuators 68 to move the fall-prevention components 67 from the retracted position P2 described above to the advanced position P1 described above. Upon receiving the second operation instruction, the actuators 68 move the fall-prevention components 67 from the retracted position P2 described above to the advanced position P1 described above.

As in the example illustrated in FIG. 13 and FIG. 14, the controller 3 may transmit the first operation instruction A1 to the actuators 68 to move the fall-prevention components 67 from the advanced position P1 described above to the retracted position P2 described above in response to the friction stir welding tool T1 approaching the fall-prevention components 67. The controller 3 may determine whether the friction stir welding tool T1 is approaching the fall-prevention components 67 based on the machining program PM. Alternatively, the controller 3 may determine whether the friction stir welding tool T1 is approaching the fall-prevention components 67 based on a signal from a proximity sensor.

As in the example illustrated in FIGS. 13 and 14, in response to the friction stir welding tool T1 approaching the first fall-prevention component 67-1, the controller 3 may control the first actuator 68-1 to move the first fall-prevention component 67-1 to the first retracted position P2-1 while the second fall-prevention component 67-2 is positioned at the second advanced position P1-2.

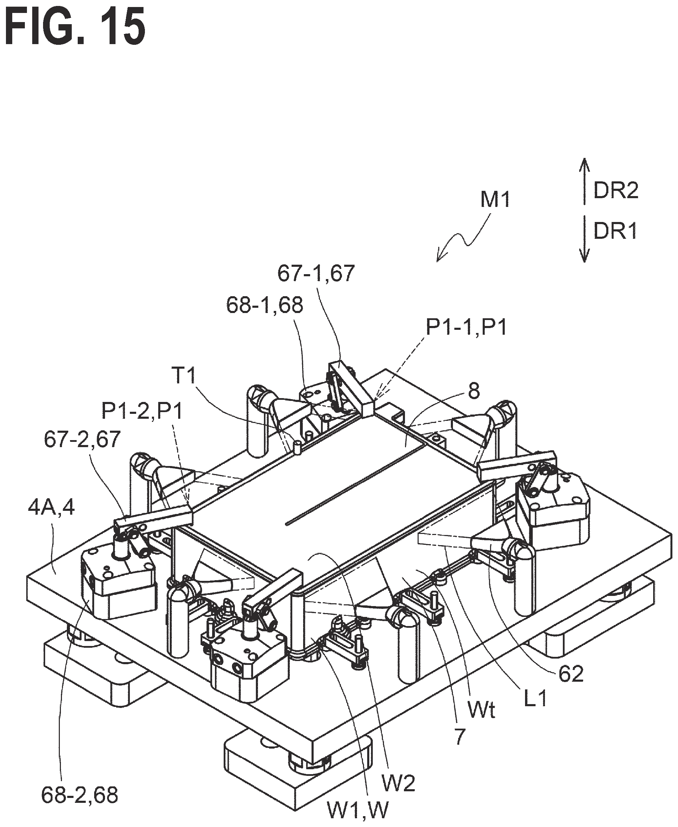

As in the example illustrated in FIGS. 15 and 16, the controller 3 may control the second actuator 68-2 in response to the friction stir welding tool T1 approaching the second fall-prevention component 67-2, to move the second fall-prevention component 67-2 to the second retracted position P2-2 while the first fall-prevention component 67-1 is positioned at the first advanced position P1-1.

In the example illustrated in FIG. 10, the welding mode M1 is executed with the friction stir welding tool T1 positioned above the backing component 40. If the machine tool 1A is a lateral machining center, the welding mode M1 may be executed with the height of the friction stir welding tool T1 being approximately equal to the height of the backing component 40.

### (Cutting Mode M2)

As in the example illustrated in FIGS. 16 and 30, the controller 3 may be capable of selectively executing the welding mode M1 and the cutting mode M2. The cutting mode M2 is a mode under which at least one of the first workpiece W1 and the second workpiece W2 is cut using the cutting tool T2. More specifically, the cutting mode M2 is a mode under which the cutting tool T2 in a rotation state is moved relative to the first workpiece W1 and the second workpiece W2 to cut at least one of the first workpiece W1 and the second workpiece W2. The first workpiece W1 is, for example, the case 7 described above, and the second workpiece W2 is, for example, the cover 8 described above.

In the example illustrated in FIG. 27, the spindle 151 can selectively hold the friction stir welding tool T1 and the cutting tool T2. The spindle 151 holds the friction stir welding tool T1 when the welding mode M1 is executed, whereas the spindle 151 holds the cutting tool T2 when the cutting mode M2 is executed.

As in the example illustrated in FIG. 33, while the cutting mode M2 is being executed, the controller 3 transmits a second rotation instruction R2 to the rotational driver 16. Upon receiving the second rotation instruction R2, the rotational driver 16 rotates the spindle 151, holding the cutting tool T2, about the first axis AX1.

While the cutting mode M2 is being executed, the controller 3 transmits a second movement instruction S2 to the mover 17. Upon receiving the second movement instruction S2, the mover 17 moves the cutting tool T2 in the rotation state relative to the first workpiece W1 and the second workpiece W2 along a second path PB specified by the machining program PM.

The second path PB may overlap the first path PA described above. For example, the cutting tool T2 (for example, the milling tool T2-1) in the rotation state may move relative to the first workpiece W1 and the second workpiece W2 along the second path PB, which overlaps the first path PA described above, so that the burrs generated during friction stirring may be removed by the cutting tool T2 (for example, the milling tool T2-1).

The second path PB may include a path parallel to the first direction DR1. For example, the cutting tool T2 (for example, the perforation tool T2-2) in the rotation state may move along the second path PB, to form a hole in the first workpiece W1 (for example, the case 7) and/or the second workpiece W2 (for example, the cover 8) by the cutting tool T2 (for example, the perforation tool T2-2). Alternatively or additionally, the cutting tool T2 (for example, the tap tool) in the rotation state may move along the second path PB, to form a screw thread in the hole described above (for example, the hole formed in the first workpiece W1) by the cutting tool T2 (for example, the tap tool).

While the cutting mode M2 is being executed, a cutting fluid may be applied to the cutting tool T2. The cutting fluid applied to the cutting tool T2 may be supplied from the tank 141 described above. The cutting fluid may be a liquid having the same composition as the coolant L1 sprayed from the at least one nozzle 61 while the friction stirring is being performed. Alternatively, the cutting mode M2 may be executed with no cutting fluid applied to the cutting tool T2 (dry cutting).

As in the example illustrated in FIG. 30, the cutting mode M2 may be executed with the fall-prevention components 67 described above positioned at the retracted position P2 separated from the second workpiece W2 (for example, the cover 8). More specifically, with the fall-prevention components 67 described above positioned at the retracted position P2 separated from the second workpiece W2 (for example, the cover 8), at least one of the first workpiece W1 (for example, the case 7) and the second workpiece W2 (for example, the cover 8) may be cut using the cutting tool T2.

If the machine tool 1A does not have the function of cutting workpieces using a cutting tool, or if there is no need to cut the first workpiece W1 or the second workpiece W2, the cutting mode M2 described above is omitted.

### (Tool Change Mode M3)

In the example illustrated in FIG. 27, the controller 3 can execute a tool change mode M3. The tool change mode M3 is a mode under which the friction stir welding tool T1 held on the spindle 151 is replaced with the cutting tool T2.

More specifically, after the welding mode M1 described above is executed, the controller 3 transmits a tool change instruction C1 to the automatic tool changer 19 to replace the friction stir welding tool T1 held on the spindle 151 with the cutting tool T2. Upon receiving the tool change instruction C1, the automatic tool changer 19 replaces the friction stir welding tool T1 held on the spindle 151 with the cutting tool T2. After the tool change mode M3 is executed, the cutting mode M2 described above is executed.

Alternatively, the tool change may be executed manually. More specifically, the operator may manually execute an operation of removing the friction stir welding tool T1 from the spindle 151 and an operation of attaching the cutting tool T2 to the spindle 151. In this case, the tool change mode M3 described above is omitted.

### (Embodiment 2)

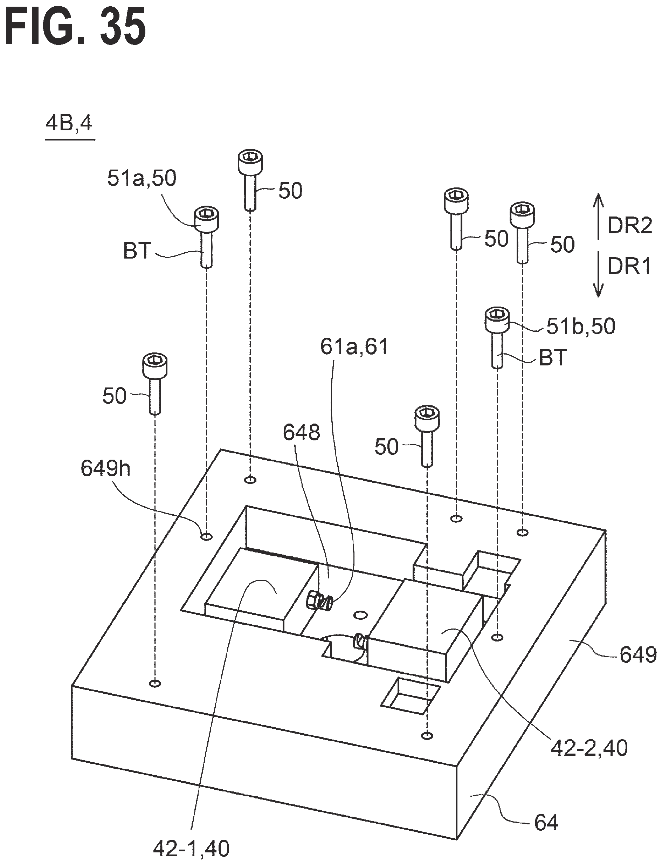

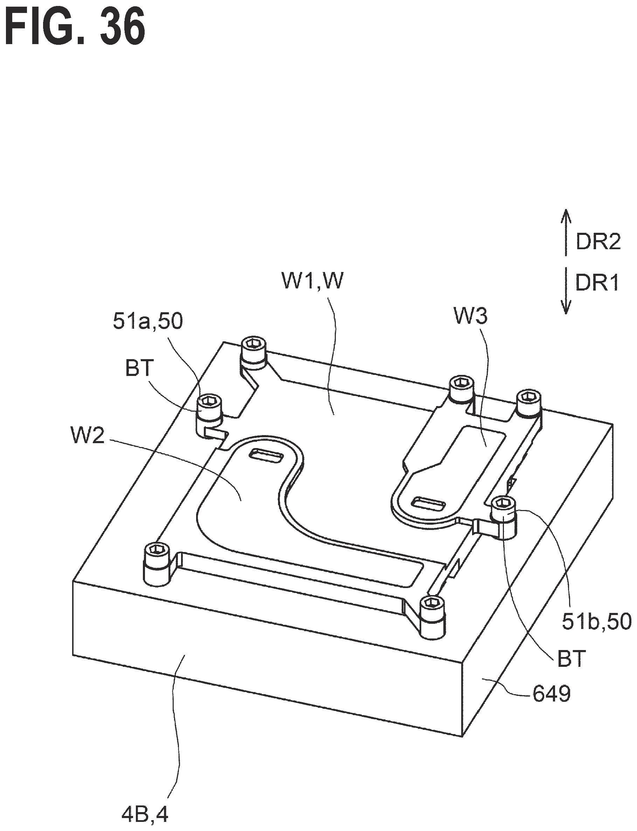

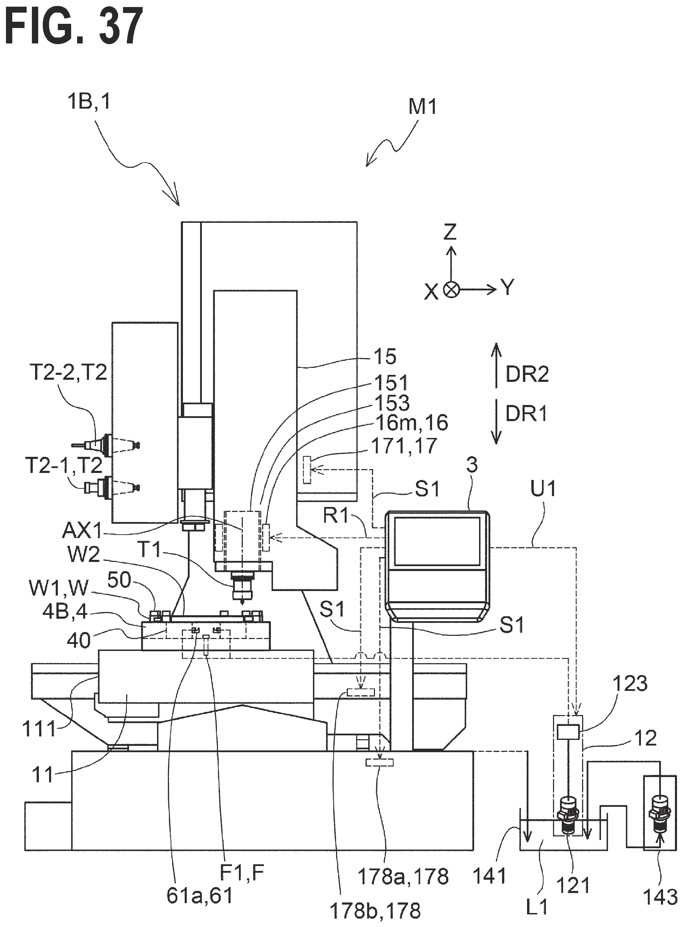

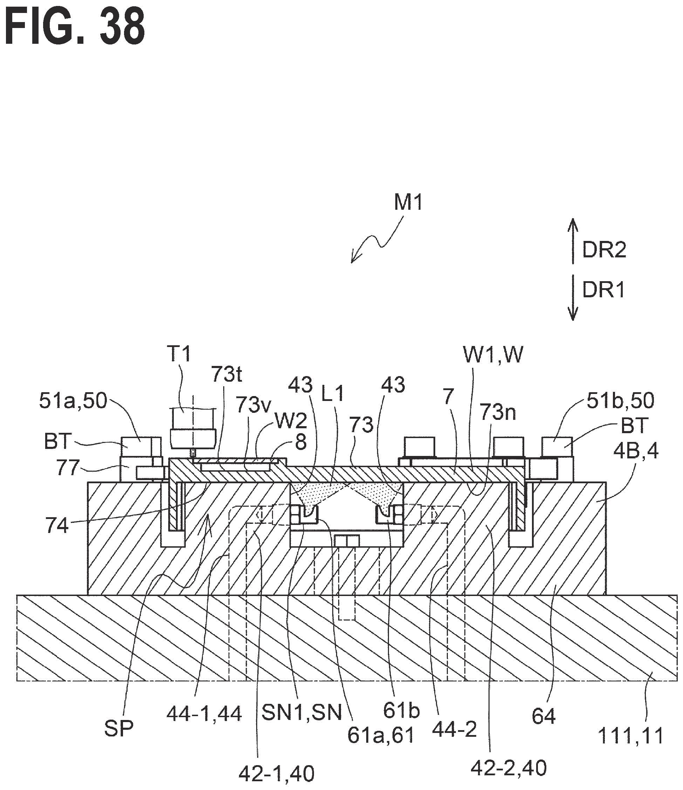

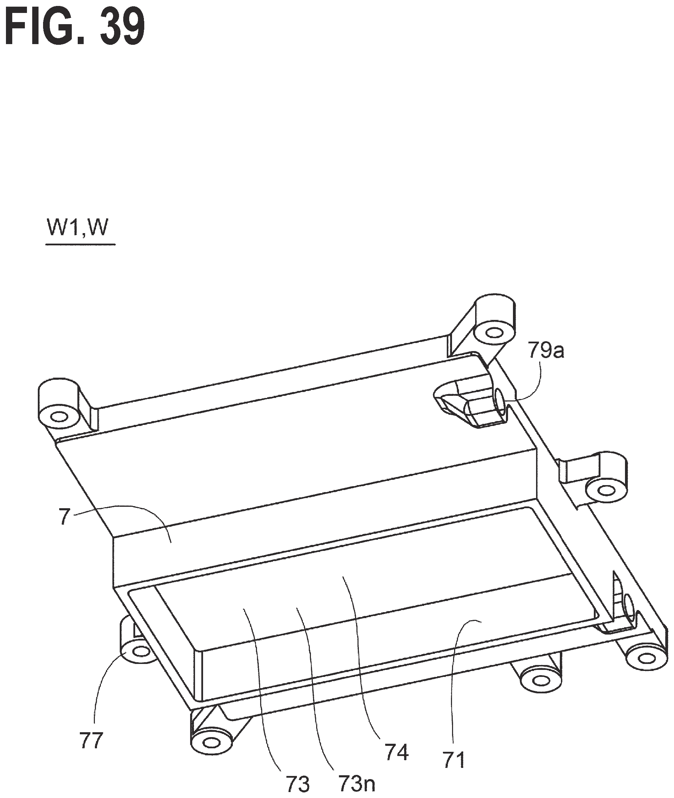

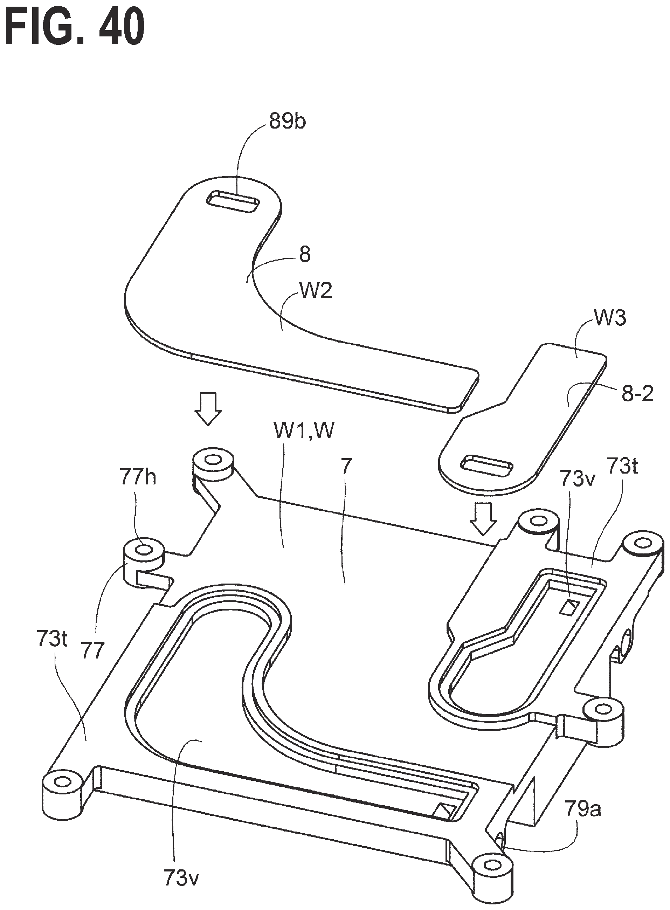

Referring to FIG. 35 to FIG. 40, a friction stir welding jig 4B and a machine tool 1B according to embodiment 2 will be described. FIG. 35 is a schematic perspective view schematically illustrating the friction stir welding jig 4B according to embodiment 2. FIG. 36 is a schematic perspective view schematically illustrating a state where the first workpiece W1 and the second workpiece W2 are supported by the friction stir welding jig 4B. FIG. 37 is a schematic front view schematically illustrating a part of the machine tool 1B according to embodiment 2. FIG. 38 is a schematic cross-sectional view schematically illustrating how the welding mode M1 is executed. FIG. 39 is a schematic perspective view schematically illustrating an example of the first workpiece W1. FIG. 40 is a schematic perspective view schematically illustrating how the second workpiece W2 and a third workpiece W3 are disposed to the first workpiece W1.

In embodiment 2, differences from embodiment 1 will be mainly described. In embodiment 2, redundant description on what have been described in embodiment 1 will be omitted. Thus, it is a matter of course that what have been described in embodiment 1, which are not explicitly described in embodiment 2, can be applied to embodiment 2.

As in the example illustrated in FIG. 35 and FIG. 36, the friction stir welding jig 4B according to embodiment 2 includes (1) the backing components 40 configured to receive pressing force from the friction stir welding tool via the first workpiece W1 serving as the joining target object and support the first workpiece W1, (2) the holding components 50 configured to hold the first workpiece W1, and (3) the at least one nozzle 61 disposed on the backing components 40 and configured to spray a coolant toward the first workpiece W1.

As in the example illustrated in FIG. 37, the machine tool 1B according to embodiment 2 includes (1) the friction stir welding jig 4B on which the first workpiece W1 serving as the joining target object is fixed, the friction stir welding jig 4B including the at least one nozzle 61 for spraying the coolant L1 toward the first workpiece W1, (2) the supporter 11 supporting the friction stir welding jig 4B, (3) the machining head 15 including the spindle 151 and the support 153 supporting the spindle 151 to be rotatable about the first axis AX1, (4) the rotational driver 16 for rotating the spindle 151 about the first axis AX1, (5) the mover 17 for moving the machining head 15 relative to the supporter 11, and (6) the supplier 12 for supplying the coolant L1 to the at least one nozzle 61. The friction stir welding jig 4B includes (1) the backing components 40 receiving pressing force from the friction stir welding tool T1 via the first workpiece W1 and supporting the first workpiece W1, (2) the holding components 50 holding the first workpiece W1, and (3) the at least one nozzle 61 disposed on the backing components 40.

Thus, the friction stir welding jig 4B and the machine tool 1B according to embodiment 2 provide the same effects as the friction stir welding jig 4A and the machine tool 1A according to embodiment 1.

### (Optional Configurations)

Next, with reference to FIG. 35 to FIG. 40, optional configurations that can be adopted in the friction stir welding jig 4B and the machine tool 1B according to embodiment 2 will be described.

### (First Workpiece W1 and Second Workpiece W2)

As in the example illustrated in FIG. 38, the first workpiece W1 has the end wall 73 supported by the backing components 40.

In the example illustrated in FIG. 39, the first workpiece W1 as the joining target object W is the case 7. The first workpiece W1 (more specifically, the case 7) is joined to the second workpiece W2 by friction stirring. The first workpiece W1 may be a workpiece other than the case. For example, the first workpiece W1 is a casted part. The first workpiece W1 is made of metal. The main component of the material of the first workpiece W1 is, for example, aluminum. In other words, the first workpiece W1 is made of aluminum or an aluminum alloy.

In the example illustrated in FIG. 38, the second workpiece W2 is the cover 8. In the example illustrated in FIG. 38, the case 7 is the first joining target object, and the cover 8 is the second joining target object. The first joining target object (for example, the case 7) and the second joining target object (for example, the cover 8) are joined by friction stirring. The second workpiece W2 may be a workpiece other than the cover. The second workpiece W2 is made of metal. The main component of the material of the second workpiece W2 is, for example, aluminum. In other words, the second workpiece W2 is made of aluminum or an aluminum alloy. As in the example illustrated in FIG. 40, the joining target object may include the third workpiece W3 (for example, a second cover 8-2) in addition to the first workpiece W1 and the second workpiece W2.

In the example illustrated in FIG. 39, the case 7 includes the recess 74 defined by the side walls 71 and the end wall 73. In the example illustrated in FIG. 38, the first direction DR1 matches the direction from the end wall 73 toward the inner space SP of the recess 74.

In the example illustrated in FIG. 39, the case 7 has the recess 74 that can receive a cooling target object. The cooling target object received in the recess 74 is electrical equipment that produces heat in response to a current flow, for example. The case 7 may be an automobile part (for example, a part of an electric vehicle) installed in an automobile with the electrical equipment contained therein. The electrical equipment producing heat in response to a current flow is contained in the recess 74 while being in contact with the end wall 73, for example.

The cooling target object (more specifically, electrical equipment) received in the recess 74 is, for example, an inverter (more specifically, a device including a circuit for converting direct current into alternating current), a converter (more specifically, an AC-DC converter for converting alternating current into direct current, or a DC-DC converter for converting a DC voltage into another DC voltage), a battery, a charger for charging a battery, a control unit such as an engine control unit, or a substrate carrying a plurality of electronic parts.

As in the example illustrated in FIG. 40, the first workpiece W1 may have protrusions 77 held by the holding components 50. The first workpiece W1 may have holes 77h receiving part of the holding components 50. In the example illustrated in FIG. 40, the holes 77h are formed in the respective protrusions 77.

As in the example illustrated in FIG. 40, the case 7 may include the groove 73v formed in the outer surface 73t of the end wall 73. The groove 73v of the end wall 73 may be formed by casting. Alternatively, the groove 73v may be formed by cutting the end wall 73 using a cutting tool.

The case 7 may include the first port 79a continuous with the groove 73v. The cover 8 may include a second port 89b continuous with the groove 73v. The first port 79a, the groove 73v, and the second port 89b form part of a refrigerant flow channel through which a refrigerant flows to cool the cooling target object (more specifically, electrical equipment) received in the recess 74.

In the example illustrated in FIG. 38, the cover 8 covers at least part of the outer surface 73t of the end wall 73 of the case 7. In the example illustrated in FIG. 38, the cover 8 covers the groove 73v of the end wall 73.

### (Friction stir welding Jig 4B)

In the example illustrated in FIG. 38, the backing component 40 includes the first post 42-1 in contact with the first workpiece W1. The first post 42-1 receives pressing force from the friction stir welding tool T1 via the first workpiece W1 and supports the first workpiece W1.

In the example illustrated in FIG. 38, the backing component 40 includes the second post 42-2 in contact with the first workpiece W1. The second post 42-2 receives pressing force from the friction stir welding tool T1 via the first workpiece W1 and supports the first workpiece W1.

In the example illustrated in FIG. 38, the base 64 attached to the supporter 11 and the first post 42-1 are integrally formed. The base 64, the first post 42-1, and the second post 42-2 may also be integrally formed.

In the example illustrated in FIG. 38, the at least one nozzle 61 is the spray nozzle SN that disperses the coolant L1 toward the first workpiece W1. The friction stir welding jig 4B may include the first nozzle 61a disposed on the backing component 40 and the second nozzle 61b disposed on the backing component 40.

In the example illustrated in FIG. 38, the first nozzle 61a is attached to the side surface 43 of the backing component 40 (more specifically, the side surface of the first post 42-1). The second nozzle 61b is attached to the side surface 43 of the backing component 40 (more specifically, the side surface of the second post 42-2).

In the example illustrated in FIG. 38, the supply flow channel 44 for supplying the coolant L1 to the at least one nozzle 61 is formed inside the backing component 40. More specifically, in the example illustrated in FIG. 38, the first supply flow channel 44-1 for supplying the coolant L1 to the first nozzle 61a is formed inside the first post 42-1. Furthermore, the second supply flow channel 44-2 for supplying the coolant L1 to the second nozzle 61b is formed inside the second post 42-2.

In the example illustrated in FIG. 35, the friction stir welding jig 4B includes the base 64 attached to the supporter 11 of the machine tool, and this base 64 has a bottom wall 648 and side walls 649. In the example illustrated in FIG. 35, the first post 42-1 is disposed on the inner side of the side walls 649. The second post 42-2 is also disposed on the inner side of the side walls 649.

In the example illustrated in FIGS. 35 and 36, the friction stir welding jig 4B includes the holding components 50 holding the first workpiece W1, and these holding components 50 include bolts BT.

In the example illustrated in FIGS. 35 and 36, the bolts BT are inserted into both the holes 77h formed in the first workpiece W1 and holes 649h formed in the friction stir welding jig 4B (more specifically, the holes 649h formed in the side walls 649), thereby fixing the first workpiece W1 to the friction stir welding jig 4B. Alternatively, the holding components 50 may be clamp-type holding components (see FIG. 4).

The friction stir welding jig 4B may be equipped with the fall-prevention components 67 (see FIG. 13) for preventing the second workpiece W2 from falling off the first workpiece W1.

### (Workpiece Machining Method)

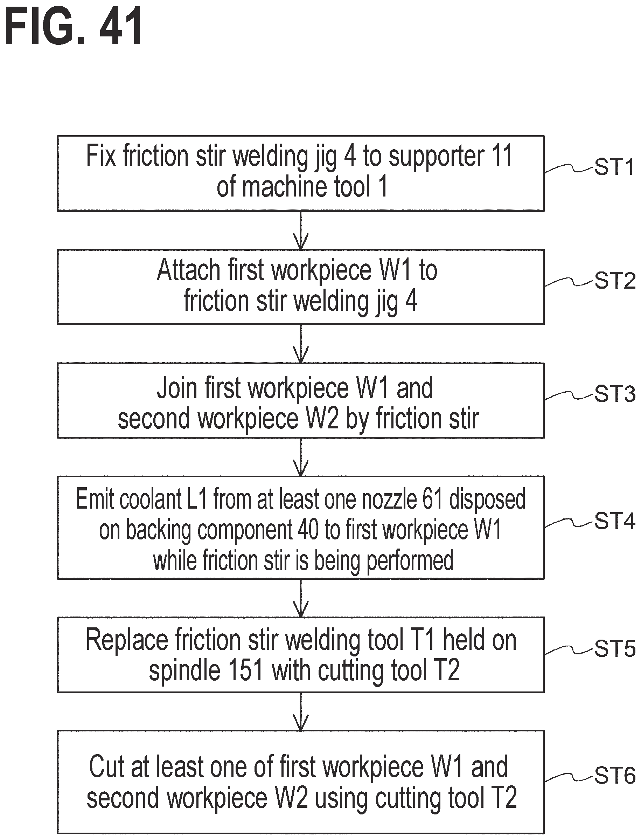

Referring to FIG. 1 to FIG. 41, a workpiece machining method according to an embodiment will be described. FIG. 41 is a flowchart illustrating an example of a workpiece machining method according to the embodiment.

As in the example illustrated in FIG. 26 or FIG. 37, in a first step ST1, the friction stir welding jig 4 is fixed to the supporter 11 (for example, the table 111) of the machine tool 1. The first step ST1 is a fixing step. The machine tool 1 may be the machine tool 1A according to embodiment 1, the machine tool 1B according to embodiment 2, or another machine tool. The components of the machine tool (1A, 1B) have already been described in embodiment 1 or embodiment 2, and thus redundant description on the components of the machine tool (1A, 1B) will be omitted.

In the fixing step (first step ST1), the friction stir welding jig 4 fixed to the supporter 11 (for example, the table 111) includes the backing components 40 and the holding components 50.

In the fixing step (first step ST1), the friction stir welding jig 4 fixed to the supporter 11 (for example, the table 111) may be the friction stir welding jig 4A according to embodiment 1, the friction stir welding jig 4B according to embodiment 2, or another friction stir welding jig. The components of the friction stir welding jig (4A, 4B) have already been described in embodiment 1 or embodiment 2, and thus redundant description on the components of the friction stir welding jig (4A, 4B) will be omitted.

The fixing step (first step ST1) may include fixing the friction stir welding jig 4 to the supporter 11 via a fixing component F (see FIG. 26 or FIG. 37), such as a bolt F1. Alternatively or additionally, the fixing step (first step ST1) may include fixing the friction stir welding jig 4 to the supporter 11 via a chuck.

When the friction stir welding jig 4 is already fixed to the supporter 11 (for example, the table 111) of the machine tool 1, the first step ST1 is omitted.

As in the example illustrated in FIG. 26 or FIG. 37, in a second step ST2, the joining target object W is attached to the friction stir welding jig 4. The second step ST2 is an attaching step. In the example illustrated in FIG. 12, the attaching step (second step ST2) includes attaching the first workpiece W1 serving as the joining target object to the friction stir welding jig 4. The first workpiece W1 attached to the friction stir welding jig 4 in the attaching step (second step ST2) may be the case 7 or any other workpiece.

The attaching step (second step ST2) includes attaching the first workpiece W1 to the friction stir welding jig 4 so that the first workpiece W1 is held by the holding components 50 of the friction stir welding jig 4. In the example illustrated in FIG. 11 or FIG. 35, the holding components 50 include the first holding component 51a and the second holding component 51b.

The attaching step (second step ST2) may include attaching the first portion (for example, the first side wall 71-1 of the case 7) of the first workpiece W1 to the first holding component 51a and attaching the second portion (for example, the second side wall 71-2 of the case 7) of the first workpiece W1 to the second holding component 51b. In the example illustrated in FIG. 9, the first holding component 51a includes the first movable portion 513a. In the example illustrated in FIG. 9, the first portion of the first workpiece W1 is clamped between the first fixed portion 511a and the first movable portion 513a. In the example illustrated in FIG. 9, the second holding component 51b includes the second movable portion 513b. In the example illustrated in FIG. 9, the second portion of the first workpiece W1 is clamped between the second fixed portion 511b and the second movable portion 513b. Each of the first fixed portion 511a and the second fixed portion 511b may be formed by a portion of the upper base 646.

Alternatively, as in the example illustrated in FIG. 36, the attaching step (second step ST2) may include attaching the first workpiece W1 to the friction stir welding jig 4 via the bolts BT.

In the example illustrated in FIG. 23, the friction stir welding jig 4 includes the base 64. The workpiece machining method according to the embodiment may include a step of adjusting the relative position of the support end 40e of the backing component 40 with respect to the base 64 in a direction parallel to the first direction DR1 (adjustment step). This adjustment step may be performed before the first workpiece W1 (for example, the case 7) is attached to the friction stir welding jig 4 or after the first workpiece W1 (for example, the case 7) is attached to the friction stir welding jig 4.

By performing the adjustment step, the end wall 73 of the first workpiece W1 is suitably supported by the support end 40e of the backing component 40.

As in the example illustrated in FIG. 23, when the backing component 40 includes the first post 42-1, the adjustment step may include extending the first post 42-1 or contracting the first post 42-1. As in the example illustrated in FIG. 24, when the backing component 40 includes the second post 42-2, the adjustment step may include extending the second post 42-2 or contracting the second post 42-2.

When the position of the support end 40e of the backing component 40 relative to the base 64 cannot be adjusted, or when there is no need to adjust the position of the support end 40e of the backing component 40 relative to the base 64, the adjustment step is omitted.

As in the example illustrated in FIG. 2 and FIG. 3, the workpiece machining method according to the embodiment may include, after the first workpiece W1 is attached to the friction stir welding jig 4, disposing the second workpiece W2 on the first workpiece W1. More specifically, after the first workpiece W1 is attached to the friction stir welding jig 4, the second workpiece W2 may be placed on the first workpiece W1.

Alternatively, the workpiece machining method according to the embodiment may include attaching the first workpiece W1 to the friction stir welding jig 4 in a state where the second workpiece W2 is placed on the first workpiece W1.

In the example illustrated in FIG. 19 or FIG. 40, the first workpiece W1 is the case 7, and the second workpiece W2 is the cover 8 covering a portion of the case 7. The cover 8 may cover the groove 73v formed in the outer surface 73t of the end wall 73 of the case 7.

As in the example illustrated in FIG. 12 and FIG. 13, the workpiece machining method according to the embodiment may include, after the second step ST2 is performed (more specifically, after the first workpiece W1 and the second workpiece W2 are supported by the friction stir welding jig 4), changing the position of the fall-prevention components 67 from the retracted position P2 separated from the second workpiece W2 (for example, the cover 8) to the advanced position P1 in contact with the second workpiece W2 (for example, the cover 8) (position changing step). If the fall-prevention components 67 do not exist, or if there is no need to use the fall-prevention components 67, the position changing step is omitted.

In a third step ST3, the first workpiece W1 (for example, the case 7) and the second workpiece W2 (for example, the cover 8) are joined by friction stirring. The third step ST3 is a joining step.

As in the example illustrated in FIG. 10 or FIG. 38, the joining step (third step ST3) is performed with the backing components 40 of the friction stir welding jig 4 receiving pressing force from the friction stir welding tool T1 via the first workpiece W1 (for example, the case 7).

More specifically, the joining step (third step ST3) includes rotating the friction stir welding tool T1 with the backing components 40 of the friction stir welding jig 4 receiving pressing force from the friction stir welding tool T1 via the first workpiece W1 (for example, the case 7). The joining step (third step ST3) may include moving the friction stir welding tool T1 relative to the first workpiece W1 along the first path PA with the backing components 40 of the friction stir welding jig 4 receiving pressing force from the friction stir welding tool T1 via the first workpiece W1 (for example, the case 7). The first path PA has already been explained in embodiment 1, and thus redundant description on the first path PA will be omitted.

As in the example illustrated in FIG. 10 or FIG. 38, in a fourth step ST4, the coolant L1 is sprayed from the at least one nozzle 61 disposed on the backing component 40 to the first workpiece W1 (for example, the case 7). More specifically, the coolant L1 is jetted from the at least one nozzle 61 disposed on the backing component 40 to the first workpiece W1 (for example, the case 7). The fourth step ST4 is a cooling step. The coolant L1 is, for example, a water-soluble coolant. The main component of the water-soluble coolant is, for example, water. The water-soluble coolant may include a water-soluble fluid (for example, a water-soluble cutting fluid or a water-soluble grinding fluid) and/or a surfactant.

The cooling step (fourth step ST4) is performed while the joining step (third step ST3) is being performed. In other words, while the friction stirring described above is being performed, the coolant L1 is sprayed from the at least one nozzle 61 disposed on the backing component 40 to the first workpiece W1 (for example, the case 7).

The cooling step (fourth step ST4) may start before the joining step (third step ST3) starts. Alternatively, the cooling step (fourth step ST4) may start simultaneously with the joining step (third step ST3). The cooling step (fourth step ST4) may be started manually or based on an instruction from the controller 3.

Execution of the cooling step (fourth step ST4) may be stopped after the joining step (third step ST3) is completed. Alternatively, execution of the cooling step (fourth step ST4) may be stopped immediately upon completion of the joining step (third step ST3). Execution of the cooling step (fourth step ST4) may be stopped manually or based on an instruction from the controller 3.

While the friction stirring is being performed, with the coolant L1 applied to the first workpiece W1, the warpage of the first workpiece W1 due to heat produced by the friction stirring is suppressed.

As in the example illustrated in FIG. 7 or FIG. 38, while the friction stirring described above is being performed, the coolant L1 may be sprayed from the at least one nozzle 61 toward substantially the entire inner surface 73n of the end wall 73 of the first workpiece W1, excluding the portion of the inner surface 73n of the end wall 73 in contact with the backing component 40. In other words, the coolant L1 may be sprayed from the at least one nozzle 61 so that the coolant L1 reaches substantially the entire inner surface 73n of the end wall 73 excluding the portion in contact with the backing component 40.

When the coolant L1 reaches substantially the entire inner surface 73n of the end wall 73 excluding the portion in contact with the backing component 40, warpage of the first workpiece W1 due to heat produced by the friction stirring is suppressed, regardless of the position of the friction stirring using the friction stir welding tool T1. Thus, there is no need to move the at least one nozzle 61 in response to a change in the position of the friction stirring using the friction stir welding tool T1.

While the friction stirring described above is being performed, the coolant L1 may be applied only to the first workpiece W1 (for example, the case 7), of the first workpiece W1 (for example, the case 7) and the second workpiece W2 (for example, the cover 8). In other words, while the friction stirring described above is being performed, the coolant L1 may be applied to the first workpiece W1 (for example, the case 7) without reaching the second workpiece W2 (for example, the cover 8). When the coolant L1 does not reach the second workpiece W2, the coolant L1 will not enter the gap between the first workpiece W1 and the second workpiece W2.

In the example illustrated in FIG. 9 or FIG. 38, the at least one nozzle 61 sprays the coolant L1 into the recess 74 of the case 7. Thus, the case 7 prevents the coolant L1 from reaching the second workpiece W2 (for example, the cover 8).

Additionally, as in the example illustrated in FIG. 13, the cooling step (fourth step ST4) may include spraying the coolant L1 from the second group of nozzles 62 onto the outer surface of the first workpiece W1. When the coolant is applied to the outer surface of the first workpiece W1 in addition to the inner surface of the first workpiece W1, thermal deformation of the first workpiece W1 due to the friction stirring is more effectively prevented.

As in the example illustrated in FIG. 13 and FIG. 14, the workpiece machining method according to the embodiment may include a step of retracting the first fall-prevention component 67-1 to move the first fall-prevention component 67-1 away from the second workpiece W2 (for example, the cover 8) while the joining step (third step ST3) is being performed (in other words, while the friction stirring described above is being performed) (retraction step). The retraction step may include retracting the first fall-prevention component 67-1 to move the first fall-prevention component 67-1 away from the second workpiece W2 (for example, the cover 8) in response to the friction stir welding tool T1 approaching the first fall-prevention component 67-1.

As in the example illustrated in FIG. 14 and FIG. 15, the workpiece machining method according to the embodiment may include a step of advancing the first fall-prevention component 67-1 toward the second workpiece W2 (for example, the cover 8) to bring the first fall-prevention component 67-1 into contact with the second workpiece W2 (for example, the cover 8) while the joining step (third step ST3) is being performed (in other words, while the friction stirring described above is being performed) (advancement step). The advancement step may include advancing the first fall-prevention component 67-1 toward the second workpiece W2 (for example, the cover 8) in response to the friction stir welding tool T1 moving away from the first advanced position P1-1 described above.

More specifically, the retraction step may include retracting the first fall-prevention component 67-1 to move the first fall-prevention component 67-1 away from the second workpiece W2 (for example, the cover 8) while the second fall-prevention component 67-2 is maintained at the second advanced position P1-2 described above in response to the friction stir welding tool T1 approaching the first fall-prevention component 67-1 (see FIG. 13 and FIG. 14). The retraction step may also include retracting the second fall-prevention component 67-2 to move the second fall-prevention component 67-2 away from the second workpiece W2 (for example, the cover 8) while the first fall-prevention component 67-1 is maintained at the first advanced position P1-1 described above in response to the friction stir welding tool T1 approaching the second fall-prevention component 67-2 (see FIG. 15 and FIG. 16).

The joining step (third step ST3) may include joining, by the friction stirring, the case 7 and the cover 8 to form the flow channel 91 (for example, a refrigerant flow channel through which the refrigerant flows) by the groove 73v formed in the end wall 73 of the case 7 and the cover 8.

The workpiece machining method according to the embodiment may include, after the joining step is performed (in other words, after the friction stir welding between the first workpiece W1 and the second workpiece W2 is completed), changing the position of the fall-prevention components 67 from the advanced position P1 in contact with the second workpiece W2 (for example, the cover 8) to the retracted position P2 separated from the second workpiece W2 (for example, the cover 8) (second position changing step). If the fall-prevention components 67 do not exist, or if there is no need to use the fall-prevention components 67, the second position changing step is omitted.

The workpiece machining method according to the embodiment may include a step of replacing the friction stir welding tool T1 held on the spindle 151 with the cutting tool T2. In the example illustrated in FIG. 27, in a fifth step ST5, the friction stir welding tool T1 held on the spindle 151 is replaced with the cutting tool T2. The fifth step ST5 is a tool change step.

The tool change step (fifth step ST5) includes removing the friction stir welding tool T1 from the spindle 151 and attaching the cutting tool T2 to the spindle 151. Replacing the friction stir welding tool T1 held on the spindle 151 with the cutting tool T2 may be performed using the automatic tool changer 19. Alternatively, replacing the friction stir welding tool T1 held on the spindle 151 with the cutting tool T2 may be performed manually. If the tool change is not required, the fifth step ST5 is omitted.

The workpiece machining method according to the embodiment may include a step of cutting at least one of the first workpiece W1 (for example, the case 7) and the second workpiece W2 (for example, the cover 8). In the example illustrated in FIG. 30, in a sixth step ST6, at least one of the first workpiece W1 (for example, the case 7) and the second workpiece W2 (for example, the cover 8) is cut using the cutting tool T2. The sixth step ST6 is a cutting step.

In the example illustrated in FIG. 30, the cutting step (sixth step ST6) is performed after the joining step is performed. In other words, the cutting step is performed after the joining of the first workpiece W1 and the second workpiece W2 is completed. In this case, after the joining step (third step ST3) is performed and before the cutting step (sixth step ST6) is performed, the friction stir welding tool T1 held on the spindle 151 is replaced with the cutting tool T2.

In the example illustrated in FIG. 30, the cutting step (sixth step ST6) includes cutting a portion of a joint region JR between the end wall 73 of the case 7 and the cover 8.

As in the example illustrated in FIG. 30, the cutting step (sixth step ST6) may include removing burrs generated during friction stirring, using the cutting tool T2 (for example, the milling tool T2-1).

Alternatively or additionally, the cutting step (sixth step ST6) may include forming a hole (for example, the holes 75h of the attachment portions 75) in the first workpiece W1 (for example, the case 7) and/or the second workpiece W2 (for example, the cover 8) using the cutting tool T2 (for example, the perforation tool T2-2). Alternatively or additionally, the cutting step (sixth step ST6) may include forming a screw thread in the hole described above (for example, the holes formed in the first workpiece W1) using the cutting tool T2 (for example, the tap tool).

Alternatively or additionally, the cutting step (sixth step ST6) may be performed before the joining step (third step ST3) is performed. Alternatively, the cutting step (sixth step ST6) may be omitted.

In the workpiece machining method according to the embodiment, the first workpiece W1 is held by the holding components 50 of the friction stir welding jig 4. Thus, while the friction stir welding is being performed, misalignment of the first workpiece W1 is prevented.

In the workpiece machining method according to the embodiment, while the friction stirring is being performed, the coolant L1 is applied to the first workpiece W1. Thus, warpage of the first workpiece W1 due to heat produced by the friction stirring is suppressed.

In the workpiece machining method according to the embodiment, the application of the coolant L1 to the first workpiece W1 is performed using the at least one nozzle 61 disposed on the backing component 40. Thus, there is no need to prepare the at least one nozzle 61 separately from the friction stir welding jig 4.

Since the at least one nozzle 61 is disposed on the backing component 40, once the position of the first workpiece W1 relative to the friction stir welding jig 4A is determined (more specifically, once the first workpiece W1 is held by the holding components 50), the position of the at least one nozzle 61 relative to the first workpiece W1 is determined. Thus, it is easy to set the position of the at least one nozzle 61 relative to the first workpiece W1.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

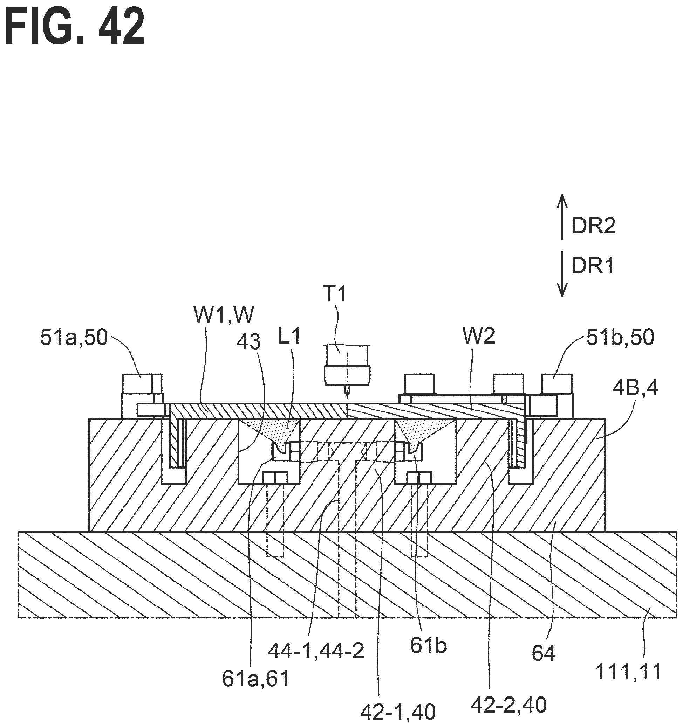

For example, in the example illustrated in in FIG. 9 and FIG. 38, only the first workpiece W1 is in contact with the backing components 40. In other words, the backing components 40 are configured to be in contact only with the first workpiece W1, of the first workpiece W1 and the second workpiece W2, while the first workpiece W1 and the second workpiece W2 are being friction stirred. Alternatively, as in the example illustrated in FIG. 42, the backing components 40 may be configured to be in contact with both the first workpiece W1 and the second workpiece W2 while the first workpiece W1 and the second workpiece W2 are being friction stirred.

### Description of the Reference Numeral

1, 1A, 1B ... Machine tool, 3 ... Controller, 4, 4A, 4B ... Friction stir welding jig, 7 ... Case, 8 ... Cover, 8-2 ... Second cover, 11 ... Supporter, 12 ... Supplier, 13 ... Circulation flow channel, 15 ... Machining head, 15g ... Lower end portion, 16 ... Rotational driver, 16m ... Motor, 17 ... Mover, 19 ... Automatic tool changer, 21 ... Wall, 23 ... Door, 30 ... Processor, 32 ... Memory, 34 ... Communication circuit, 36 ... Inputter, 36t ... Touch panel, 37 ... Display, 38 ... Bus, 40 ... Backing component, 40e ... Support end, 42 ... Post, 42-1 ... First post, 42-2 ... Second post, 42-3 ... Third post, 42-4 ... Fourth post, 42-5 ... Fifth post, 42-6 ... Sixth post, 42a-1 ... First end, 42a-2 ... Second end, 43 ... Side surface, 43a ... First side surface, 43b ... Second side surface, 43c ... Third side surface, 44 ... Supply flow channel, 44-1 ... First supply flow channel, 44-2 ... Second supply flow channel, 44-3 ... Third supply flow channel, 50 ... Holding component, 51a ... First holding component, 51b ... Second holding component, 61 ... Nozzle, 61a ... First nozzle, 61b ... Second nozzle, 61c ... Third nozzle, 61d ... Nozzle, 62 ... Nozzle, 64 ... Base, 64-1 ... First spring, 64-2 ... Second spring, 64h ... Attachment hole, 65-1 ... First fixing component, 65-2 ... Second fixing component, 67 ... Fall-prevention component, 67-1 ... First fall-prevention component, 67-2 ... Second fall-prevention component, 68 ... Actuator, 68-1 ... First actuator, 68-2 ... Second actuator, 71 ... Side wall, 71-1 ... First side wall, 71-2 ... Second side wall, 71-3 ... Third side wall, 71-4 ... Fourth side wall, 72 ... Collar, 72-1 ... First flange, 72-2 ... Second flange, 73 ... End wall, 73n ... Inner surface, 73p ... Projection, 73t ... Outer surface, 73v ... Groove, 74 ... Recess, 75 ... Attachment portion, 75h ... Hole, 77 ... Protrusion, 77h ... Hole, 79a ... First port, 79b ... Second port, 81 ... Outer edge, 83 ... Center portion, 89b ... Second port, 91 ... Flow channel, 111 ... Table, 121 ... Pump, 123 ... Valve, 131 ... Flow channel, 138 ... Return flow channel, 141 ... Tank, 143 ... Chiller, 151 ... Spindle, 153 ... Support, 171 ... Machining head mover, 178 ... Table mover, 178a ... X-axis mover, 178b ... Y-axis mover, 191 ... Tool change arm, 191a ... First gripping portion, 191b ... Second gripping portion, 194 ... Arm rotator, 196 ... Arm mover, 421-1 ... First portion, 421-2 ... Second portion, 421-3 ... Third portion, 421-4 ... Fourth portion, 511a ... First fixed portion, 511b ... Second fixed portion, 513a ... First movable portion, 513b ... Second movable portion, 641 ... Lower base, 646 ... Upper base, 646h ... Through hole, 647 ... Connection post, 648 ... Bottom wall, 649 ... Side wall, 649h ... Hole, 730 ... Bottom wall, 731 ... Step, A1 ... First operation instruction, AX1 ... First axis, AX2 ... Second axis, BT ... Bolt, C1 ... Tool change instruction, CB ... Lid, DA ... Data, DR1 ... First direction, DR2 ... Second direction, F ... Fixing component, F1 ... Bolt, G ... Region in first workpiece coming into contact with backing component, JR ... Joint region, L1 ... Coolant, M1 ... Welding mode, M2 ... Cutting mode, M3 ... Tool change mode, OP ... Opening, P1 ... Advanced position, P1-1 ... First advanced position, P1-2 ... Second advanced position, P2 ... Retracted position, P2-1 ... First retracted position, P2-2 ... Second retracted position, PA ... First path, PA1 ... Boundary between first workpiece and second workpiece, PA1-1 ... Boundary between step of case and outer edge of cover, PA2 ... Path along region where first workpiece and second workpiece overlap, PA2-1 ... Path that passes through center portion of cover, PB ... Second path, PM ... Machining program, R1 ... First rotation instruction, R2 ... Second rotation instruction, RG1 ... Machining region, S1 ... First movement instruction, S2 ... Second movement instruction, SB1 ... First screw component, SB2 ... Second screw component, SN ... Spray nozzle, SN1 ... First spray nozzle, SP ... Inner space, SP1 ... Space between first holding component and second holding component, T1 ... Friction stir welding tool, T2 ... Cutting tool, T2-1 ... Milling tool, T2-2 ... Perforation tool, U1 ... Supply instruction, W ... Joining target object, W1 ... First workpiece, W2 ... Second workpiece, W3 ... Third workpiece, Wt ... Outer side surface

## Claims

1. A friction stir welding jig comprising:
a backing component configured to receive pressing force from a friction stir welding tool via a first workpiece serving as a joining target object and support the first workpiece;
a holding component configured to hold the first workpiece; and
at least one nozzle disposed on the backing component and configured to spray a coolant toward the first workpiece.

2. The friction stir welding jig according to claim 1, wherein the at least one nozzle includes a spray nozzle configured to disperse the coolant toward the first workpiece.

3. The friction stir welding jig according to claim 1 or 2, wherein the at least one nozzle is attached to a side surface of the backing component.

4. The friction stir welding jig according to any one of claims 1 to 3, wherein a supply flow channel configured to supply the coolant to the at least one nozzle is formed inside the backing component.

5. The friction stir welding jig according to any one of claims 1 to 4, wherein
the backing component includes
a first post having a first end in contact with the first workpiece, and
a second post having a second end in contact with the first workpiece, and
a position of the first end is different from a position of the second end in a direction along a first direction, the first direction being defined as a direction of pressing the first workpiece by the friction stir welding tool.

6. The friction stir welding jig according to any one of claims 1 to 4, further comprising a base configured to support the backing component, wherein
the backing component has a support end in contact with the first workpiece, and
a position of the support end relative to the base is adjustable in a first direction, the first direction being defined as a direction of pressing the first workpiece by the friction stir welding tool.

7. The friction stir welding jig according to any one of claims 1 to 6, wherein
the holding component is configured to hold a side wall of the first workpiece, and
the backing component is configured to support an end wall of the first workpiece.

8. The friction stir welding jig according to any one of claims 1 to 7, wherein
the holding component includes
a first holding component configured to hold a first portion of the first workpiece, and
a second holding component configured to hold a second portion of the first workpiece, and
the backing component is disposed to cross a space between the first holding component and the second holding component.

9. The friction stir welding jig according to any one of claims 1 to 8, further comprising a fall-prevention component configured to prevent the second workpiece from falling off the first workpiece, wherein
a position of the fall-prevention component is changeable between an advanced position in contact with the second workpiece and a retracted position separated from the second workpiece.

10. A machine tool comprising:
a friction stir welding jig on which a first workpiece serving as a joining target object is fixed, the friction stir welding jig including at least one nozzle configured to spray a coolant toward the first workpiece;
a supporter configured to support the friction stir welding jig;
a machining head including a spindle and a support configured to support the spindle to be rotatable about a first axis;
a rotational driver configured to rotate the spindle about the first axis;
a mover configured to move the machining head relative to the supporter; and
a supplier configured to supply the coolant to the at least one nozzle, wherein
the friction stir welding jig includes
a backing component configured to receive pressing force from a friction stir welding tool via the first workpiece and support the first workpiece,
a holding component configured to hold the first workpiece, and
the at least one nozzle disposed on the backing component.

11. The machine tool according to claim 10, further comprising a wall surrounding a machining region where friction stirring is performed.

12. The machine tool according to claim 10 or 11, further comprising a controller configured to control the rotational driver and the mover, wherein
the controller is capable of selectively executing
a welding mode under which friction stir welding is performed on the first workpiece and the second workpiece using the friction stir welding tool, and
a cutting mode under which at least one of the first workpiece and the second workpiece is cut using a cutting tool.

13. A workpiece machining method comprising:
attaching a first workpiece serving as a joining target object to a friction stir welding jig, with a holding component of the friction stir welding jig holding the first workpiece;
joining, by friction stirring, the first workpiece and a second workpiece with a backing component of the friction stir welding jig receiving pressing force from a friction stir welding tool via the first workpiece; and
spraying a coolant from at least one nozzle disposed on the backing component to the first workpiece while the friction stirring is being performed.

14. The workpiece machining method according to claim 13, wherein
the first workpiece has an end wall supported by the backing component,
while the friction stirring is being performed, the coolant is sprayed from the at least one nozzle toward substantially an entire inner surface of the end wall, excluding a portion of the inner surface of the end wall in contact with the backing component.

15. The workpiece machining method according to claim 13 or 14, wherein while the friction stirring is being performed, the coolant is applied only to the first workpiece, of the first workpiece and the second workpiece.
